# EUROPEAN PATENT APPLICATION

(11) **EP 4 694 465 A1**
(43) Date of publication of application: **11.02.2026**
(21) Application number: 24784906.0
(22) Date of filing: 02.04.2024
(51) Int. Cl.: H04W 72/0457, H04W 76/15, H04W 84/12, H04W 92/20

(54) **COMMUNICATION DEVICE AND COMMUNICATION METHOD**

(30) Priority: 06.04.2023 JP 2023062316
(71) Applicant: Panasonic Intellectual Property Corporation of America, Torrance, CA 90504 (US)
(72) Inventor: HASHI, Ryutaro, Kadoma-shi, Osaka 571-0057 (JP); IWAI, Takashi, Kadoma-shi, Osaka 571-0057 (JP); NAKANO, Takayuki, Kadoma-shi, Osaka 571-0057 (JP); MOTOZUKA, Hiroyuki, Kadoma-shi, Osaka 571-0057 (JP); URABE, Yoshio, Kadoma-shi, Osaka 571-0057 (JP); MIURA, Taichi, Kadoma-shi, Osaka 571-0057 (JP)
(74) Representative: Grünecker Patent- und Rechtsanwälte PartG mbB
(86) International application number: PCT/JP2024/013600
(87) International publication number: WO 2024/210121

(57) **Abstract**

This communication device comprises: a reception circuit that receives first information pertaining to the setting of cooperative communication from another communication device that controls cooperative communication; and a transmission circuit that transmits, to the other communication device, second information including a result of determining whether to participate in cooperative communication based on the first information.

## Description

### Technical Field

The present disclosure relates to a communication apparatus and a communication method.

### Background Art

In a Task Group (TG) of 802.11be, which is a standard of the Institute of Electrical and Electronics Engineers (IEEE) 802.11, and an Ultra High Reliability (UHR) Study Group (SG), discussions on requirements specification are in progress.

### Citation List

### Non-Patent Literature

NPL 1
   IEEE Std 802.11ax-2021
NPL 2
   IEEE802.11-19/0804r0, Multi-AP Transmission Procedure
NPL 3
   IEEE802.11-20/0410r4, Coordinated Spatial Reuse Procedure
NPL 4
   IEEE802.11-22/1512r0, Multi-AP Coordination and Residential Wi-Fi

### Summary of Invention

However, there is room for study on a method for controlling signal transmission in radio communication such as a wireless LAN.

A non-limiting example of the present disclosure facilitates providing a communication apparatus and a communication method each capable of improving efficiency of transmission control in a radio communication.

A communication apparatus according to an exemplary embodiment of the present disclosure includes: reception circuitry, which, in operation, receives first information related to a configuration of coordinated communication from another communication apparatus that controls the coordinated communication; and transmission circuitry, which, in operation, transmits, to the other communication apparatus, second information including a determination result of whether participation in the coordinated communication based on the first information is possible.

It should be noted that general or specific embodiments may be implemented as a system, an apparatus, a method, an integrated circuit, a computer program, a storage medium, or any selective combination thereof.

According to an example of the present disclosure, it is possible to improve efficiency of transmission control in radio communication.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 illustrates an operation example of centralized Coordinated Spatial Reuse (C-SR) control;
FIG. 2 illustrates an operation example of distributed C-SR control;
FIG. 3 illustrates a processing example of the C-SR control;
FIG. 4 illustrates an example of a network configuration;
FIG. 5 is a block diagram illustrating a partial configuration example of a communication apparatus;
FIG. 6 is a block diagram illustrating a partial configuration example of another communication apparatus;
FIG. 7 is a block diagram illustrating a configuration example of the communication apparatus;
FIG. 8 is a block diagram illustrating a configuration example of the other communication apparatus;
FIG. 9 illustrates an operation example of the centralized C-SR control;
FIG. 10 illustrates another example of the network configuration;
FIG. 11 illustrates another operation example of the distributed C-SR control;
FIG. 12 illustrates an example of a relationship between a transmission parameter and a signal to noise ratio (SNR) satisfying a packet error rate (PER) = 10%;
FIG. 13 illustrates an example of a relationship between the transmission parameter, the SNR satisfying the PER = 10% and an acceptable received interference level (ARIL);
FIG. 14 illustrates an estimation example of an acceptable amount of interference from a coordinated node;
FIG. 15 illustrates an estimation example of a transmission power acceptable for the coordinated node;
FIG. 16 illustrates exemplary interference paths;
FIG. 17 illustrates an example of a coordination candidate pattern;
FIG. 18 illustrates an operation example of C-SR preparation;
FIG. 19 illustrates an operation example of C-SR setup-request;
FIG. 20 illustrates an operation example of C-SR setup-response;
FIG. 21 illustrates an operation example of C-SR trigger and C-SR data transmission;
FIG. 22 illustrates exemplary coordination patterns;
FIG. 23 illustrates another operation example of the C-SR setup-request;
FIG. 24 illustrates another operation example of the C-SR setup-response;
FIG. 25 illustrates an operation example of the C-SR trigger;
FIG. 26 illustrates other exemplary coordination patterns;
FIG. 27 illustrates an operation example of C-SR setup;
FIG. 28 illustrates an example of indication and response in the C-SR setup;
FIG. 29 illustrates another example of indication and response in the C-SR setup;
FIG. 30 illustrates a format example of the C-SR setup-response;
FIG. 31 illustrates another format example of the C-SR setup-response;
FIG. 32 illustrates still another format example of the C-SR setup-response;
FIG. 33 illustrates still another format example of the C-SR setup-response;
FIG. 34 illustrates format examples of the C-SR setup-request and the C-SR setup-response;
FIG. 35 illustrates other format examples of the C-SR setup-request and the C-SR setup-response;
FIG. 36 illustrates still other format examples of the C-SR setup-request and the C-SR setup-response;
FIG. 37 illustrates an example of a relationship between a modulation and coding scheme (MCS) index and the ARIL;
FIG. 38 illustrates another format example of the C-SR setup-request;
FIG. 39 illustrates another format example of the C-SR setup-response;
FIG. 40 illustrates still another format example of the C-SR setup-response;
FIG. 41 illustrates still another format example of the C-SR setup-response;
FIG. 42 illustrates an operation example of the C-SR setup-response;
FIG. 43 illustrates a format example of the C-SR setup-response;
FIG. 44 illustrates another format example of the C-SR setup-response;
FIG. 45 illustrates another operation example of the C-SR setup;
FIG. 46 illustrates an operation example of the coordinated communication by C-SR;
FIG. 47 illustrates still another format example of the C-SR setup-request;
FIG. 48 illustrates still another format example of the C-SR setup-request;
FIG. 49 illustrates an example of a relationship between the ARIL and a modulation scheme;
FIG. 50 illustrates an example of a relationship between the ARIL and transmission power; and
FIG. 51 illustrates still another format example of the C-SR setup-request.

### Description of Embodiments

Hereinafter, embodiments of the present disclosure will be described in detail with reference to the accompanying drawings.

In the TG of the IEEE 802.11be standard and the UHR SG, a method of performing coordinated control among a plurality of basic service sets (BSS) has been proposed as a method of realizing high throughput performance or low delay. As one of the methods for the coordinated control among the plurality of BSSs, Multi-AP coordination in which a plurality of access points (APs) cooperate with one another to transmit and receive data to and from each non-AP station (or station (STA) or terminal) has been discussed. For example, in the UHR, a "coordinated SR (C-SR) control method" for more efficiently performing a spatial reuse (SR) control method defined in the IEEE 802.11ax standard in a Multi-AP environment has been proposed (see, e.g., NPL 4).

Note that the AP and the STA may each be referred to as a "communication apparatus." In addition, the Multi-AP coordination may be referred to as Multi-AP coordinated transmission, Multi-AP coordinated reception, Multi-AP coordinated communication, coordinated transmission, coordinated reception, or coordinated communication.

In the C-SR control, for example, in order to estimate a transmission parameter for which coordinated communication (e.g., simultaneous communication sharing any one or some of time, space, frequency band, or other communication resources) with less impact of interference caused by a plurality nodes (e.g., APs) on one another can be realized, the results of estimation of the impact of interference among nodes in different BSSs are transmitted to one another to perform coordinated control. For example, NPL 3 discloses a process ("C-SR setup") of indicating the estimation result between BSSs in the C-SR control. In addition, NPL 2 discloses a communication method between nodes (e.g., APs) in different BSSs using a coordinated control method including the C-SR control.

However, a frame format for efficiently performing control in the C-SR control has not been sufficiently studied.

In a non-limiting exemplary embodiment of the present disclosure, an exemplary frame format in the C-SR control will be described. For example, in the non-limiting exemplary embodiment of the present disclosure, a method of transmitting a parameter for the coordinated communication calculated for each BSS and/or each node to a different BSS in the C-SR control targeting a plurality of BSSs will be described. According to the non-limiting exemplary embodiment of the present disclosure, it is possible to improve efficiency of the C-SR control.

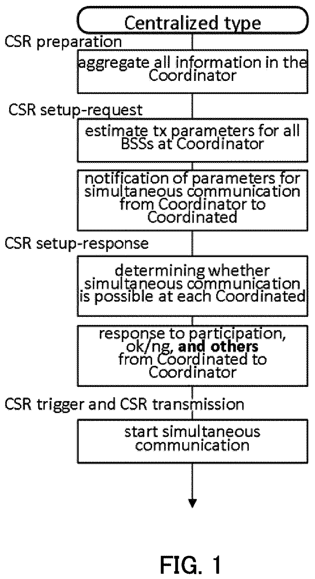

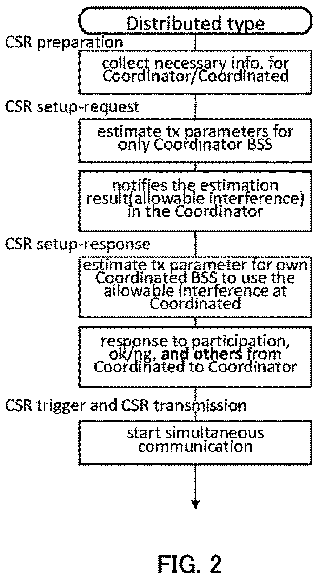

FIGS. 1 and 2 each illustrate an example of a control procedure of the C-SR control.

In general, a system for performing coordinated control is composed of a node that performs the coordinated control and a node that receives the coordinated control (e.g., controlled node).

In the following description, the controlling node and the controlled node will be referred to as a "coordinator node" and an "coordinated node," respectively. Note that the controlling node and the controlled node may also be referred to as a "master node" and a "slave node," a "candidator node" and a "candidate node," or a "sharing node" and a "shared node," respectively.

In addition, in the following description, in a case where an exemplary procedure is shown in which the coordinator node and the coordinated node are access points (APs) that are controlling nodes in respective BSSs, the coordinator node and the coordinated node will be referred to as a "coordinator AP" and an "coordinated AP," respectively.

In the C-SR control, each node calculates impacts of interference caused by a plurality of communications on one another and adjusts a transmission parameter such as transmission power, a modulation scheme, or a coding rate to reduce the impact of interference caused on one another, thereby enabling the coordinated communication. An example of this calculation procedure will be described, with the C-SR control roughly classified into two types: a centralized type (e.g., FIG. 1) and a distributed type (e.g., FIG. 2). Note that the terms "centralized type" and "distributed type" are for descriptive convenience, and the present embodiment can be similarly realized in other C-SR control procedures.

In the centralized type, the coordinator node (e.g., also referred to as "coordinator") handles the calculation process related to the C-SR control. For example, the coordinator node aggregates information on propagation paths of nodes related to the coordinated control and calculates an estimation value of a communication node and/or a transmission parameter (e.g., referred to as "communication node/transmission parameter") for each BSS used for the coordinated communication.

In the distributed type, the calculation process of the C-SR control is shared between the coordinator node and the coordinated node (e.g., also referred to as "coordinated"). For example, information on the propagation path is acquired by each of the coordinator node and the coordinated node, and the communication node/transmission parameter in each BSS is individually estimated.

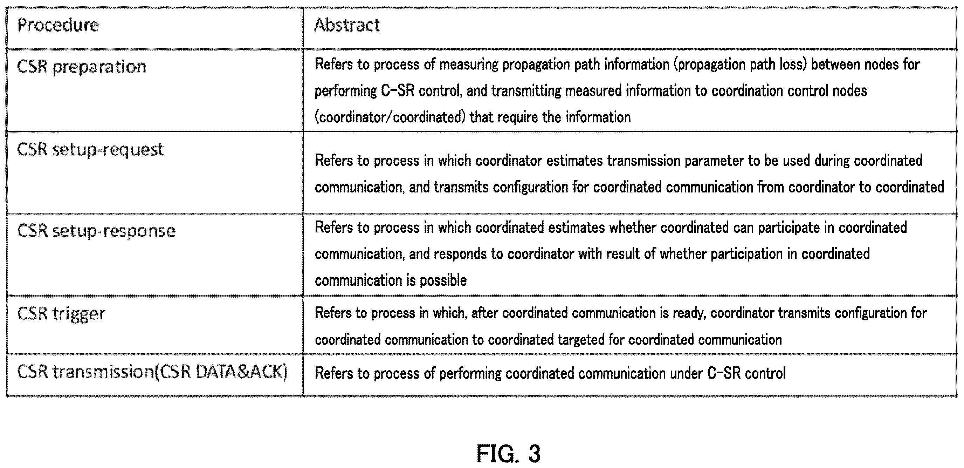

For example, in the exemplary control procedure of the centralized C-SR control illustrated in FIG. 1, the control procedure illustrated in FIG. 3 is described in four stages (CSR preparation, CSR setup request, CSR setup response, and CSR trigger and CSR transmission). Note that the stages of the control procedure illustrated in FIG. 3 are merely examples, and the stages may be combined, subdivided, or described with new stages added.

In the CSR setup stage of the centralized C-SR control illustrated in FIG. 1, a main information element transmitted from the coordinator node to the coordinated node is an estimation value of the communication node/transmission parameter for each BSS used for the coordinated communication (or simultaneous communication), which is calculated in the coordinator node. The coordinated node responds to the coordinator node (CSR setup response) based on, for example, the information from the coordinator node (CSR setup request).

In addition, in the exemplary control procedure of the distributed C-SR control illustrated in FIG. 2, the control procedure illustrated in FIG. 3 is described in four stages (CSR preparation, CSR setup request, CSR setup response, and CSR trigger and CSR transmission), as in the centralized type illustrated in FIG. 1.

In the CSR setup stage of the distributed C-SR control illustrated in FIG. 2, a main information element transmitted from the coordinator node to the coordinated node is a value that is calculated by the coordinator node and used for calculation at the coordinated node. The coordinated node responds to the coordinator node (CSR setup response) based on, for example, a result of the calculation (or estimation) using the information from the coordinator node (CSR setup request).

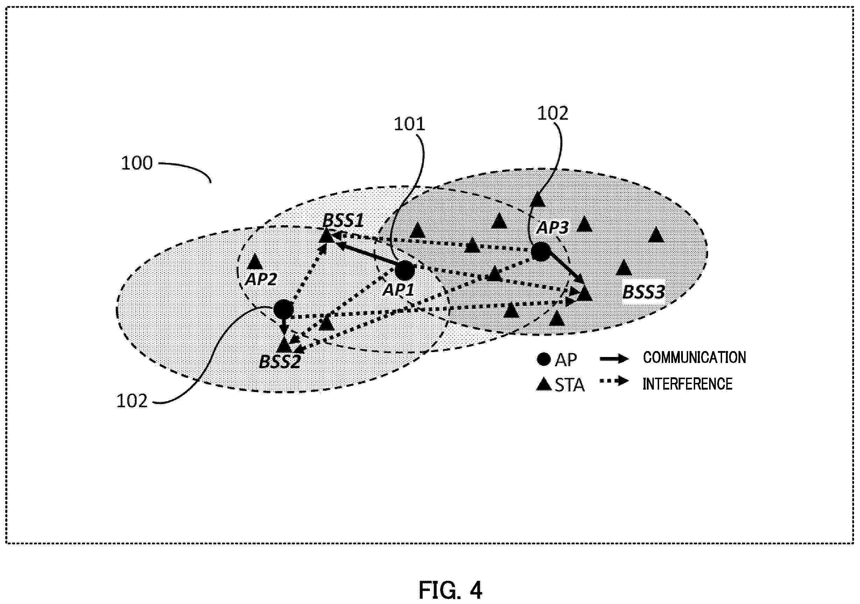

FIG. 4 illustrates an example of coordinated control in a radio communication system according to an exemplary embodiment of the present disclosure.

In the radio communication of IEEE 802.11, one AP that can be connected to a wired network serves as a main unit, and configures a basic service set (BSS). The basis service set is a network in which the AP performs radio communication with a plurality of stations that are not APs (non-AP STAs, hereinafter, each referred to "STA"). The area (or coverage) of the BSS refers to the area where radio communication with the AP is possible, and a wide radio communication area can be achieved by using multiple APs. In the example of FIG. 4, three BSSs (BSS1, BSS2, and BSS3) are controlled by three APs (AP1, AP2, and AP3) to constitute network 100.

In addition, in the example of FIG. 4, in network 100, AP1 operates as a coordinator node (or coordinator AP) that controls C-SR communication, and AP2 and AP3 operate as coordinated nodes (coordinated APs) that receive the control of the C-SR communication by the coordinator node. AP1 may have, for example, a configuration of communication apparatus 101 (or also referred to as a radio communication device or a radio communication apparatus) that mainly controls the C-SR communication. In addition, AP2 and AP3 may each have, for example, a configuration of communication apparatus 102 having a function of determining whether transmission is possible using the parameter for the coordinated communication transmitted by the coordinator node (or whether the communication apparatus can participate in the C-SR communication), which is one of the configurations of transmission nodes in the C-SR-controlled coordinated communication.

Note that one node (e.g., AP) may have both the configuration of communication apparatus 101 and the configuration of communication apparatus 102. For example, in the distributed C-SR control, the coordinated node may have the configuration of communication apparatus 101 in addition to the configuration of communication apparatus 102.

Furthermore, for example, in a case where the non-AP STA participates as the transmission node of the coordinated communication, the non-AP STA may have the configuration of communication apparatus 102.

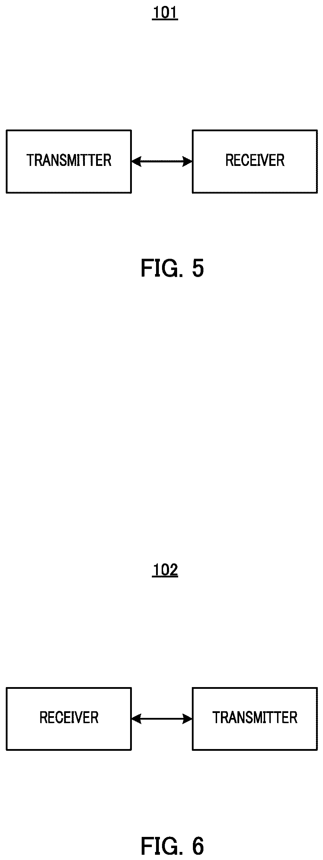

FIG. 5 is a block diagram illustrating a partial configuration example of communication apparatus 101 according to an exemplary embodiment of the present disclosure. In communication apparatus 101 illustrated in FIG. 5, a transmitter (e.g., corresponding to transmission circuitry) transmits first information related to the configuration of coordinated communication to another communication apparatus (e.g., coordinated node) that receives the control of the coordinated communication (e.g., C-SR control). A receiver (e.g., corresponding to reception circuitry) receives second information including a determination result of whether participation in the coordinated communication based on the first information is possible, from the other communication apparatus (e.g., coordinated node).

FIG. 6 is a block diagram illustrating a partial configuration example of communication apparatus 102 according to an exemplary embodiment of the present disclosure. In communication apparatus 102 illustrated in FIG. 6, a receiver (e.g., corresponding to reception circuitry) receives first information related to the configuration of coordinated communication (e.g., C-SR communication) from another communication apparatus (e.g., coordinator node) that controls the coordinated communication. A transmitter (e.g., corresponding to transmission circuitry) transmits, to the other communication apparatus (e.g., coordinator node), second information including a determination result of whether participation in the coordinated communication based on the first information is possible.

### [Configuration Example of Communication Apparatus 101]

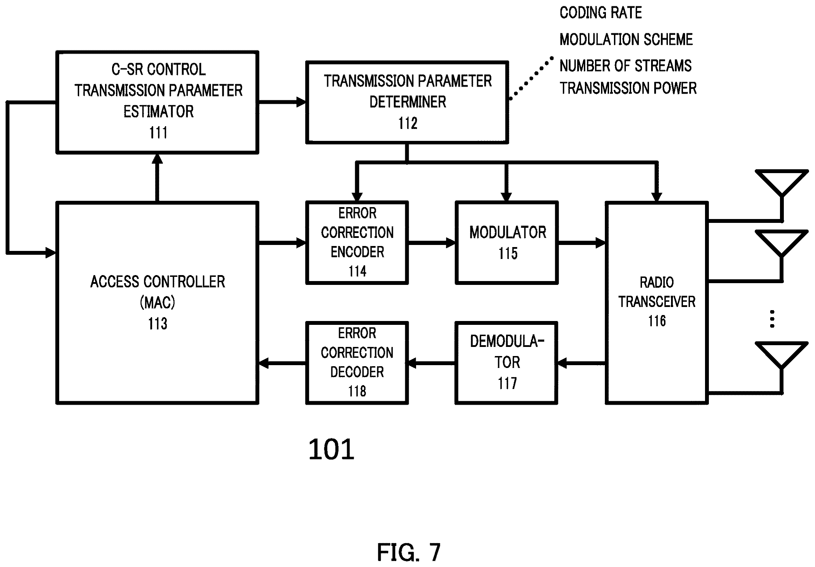

FIG. 7 is a block diagram illustrating a configuration example of communication apparatus 101.

Communication apparatus 101 illustrated in FIG. 7 may include, for example, transmission parameter estimator for C-SR control (hereinafter, referred to as C-SR control transmission parameter estimator) 111, transmission parameter determiner 112, access controller 113 (or medium access control (MAC) processor), error correction encoder 114, modulator 115, radio transceiver 116, demodulator 117, and error correction decoder 118.

Access controller 113 controls, for example, communication data. For example, access controller 113 may control a coding rate and a modulation scheme (e.g., modulation and coding scheme (MCS)) and transmission power for the communication data. In addition, for example, when the data input from error correction decoder 118 includes an information element related to the control of a transmission parameter for C-SR control, access controller 113 instructs C-SR control transmission parameter estimator 111 to estimate a transmission parameter for C-SR control. Access controller 113 outputs, for example, the determined control information or the communication data including the information input from C-SR control transmission parameter estimator 111 to error correction encoder 114.

C-SR control transmission parameter estimator 111 estimates the transmission parameter for the C-SR control in accordance with the instruction from access controller 113. For example, C-SR control transmission parameter estimator 111 may estimate a transmission parameter during a coordinated communication related to the BSS to which communication apparatus 101 belongs. In addition, for example, in the centralized C-SR control, in addition to the BSS, C-SR control transmission parameter estimator 111 may estimate a transmission parameter during a coordinated communication related to another BSS different from the BSS to which communication apparatus 101 belongs. For example, C-SR control transmission parameter estimator 111 may output the estimated value of the transmission parameter to transmission parameter determiner 112 when communication apparatus 101 uses the transmission parameter, and output the estimated value of the transmission parameter to access controller 113 when another node different from communication apparatus 101 uses the transmission parameter.

Transmission parameter determiner 112 determines the transmission parameter based on, for example, the estimated value of the transmission parameter input from C-SR control transmission parameter estimator 111. The transmission parameter may include, for example, at least one of a coding rate, a modulation scheme, the number of streams, or transmission power. Note that the transmission parameter is not limited thereto and may include another parameter. Transmission parameter determiner 112 outputs the determined transmission parameter to error correction encoder 114, modulator 115, and radio transceiver 116.

Error correction encoder 114 encodes, for example, the communication data and outputs the encoded communication data to modulator 115. For example, error correction encoder 114 may perform encoding processing based on the information input from transmission parameter determiner 112.

Modulator 115 modulates, for example, the signal input from error correction encoder 114 and outputs the modulated signal to radio transceiver 116. For example, modulator 115 may perform modulation processing based on the information input from transmission parameter determiner 112.

Radio transceiver 116 performs, for example, radio transmission processing such as D/A conversion and up-conversion to a carrier frequency on the signal input from modulator 115, and transmits the signal after the radio transmission processing via antennas. In addition, radio transceiver 116 receives, for example, a signal transmitted from another communication apparatus (e.g., communication apparatus 102) via the antennas, performs radio reception processing such as down-conversion to a baseband and A/D conversion on the received signal, and outputs the signal after the radio reception processing to demodulator 117. For example, radio transceiver 116 may perform the radio transmission/reception processing based on information input from transmission parameter determiner 112.

Demodulator 117 demodulates the signal input from radio transceiver 116 and outputs the demodulated signal to error correction decoder 118.

Error correction decoder 118 decodes the signal input from demodulator 117 and outputs the decoded data to access controller 113.

### [Configuration Example of Communication apparatus 102]

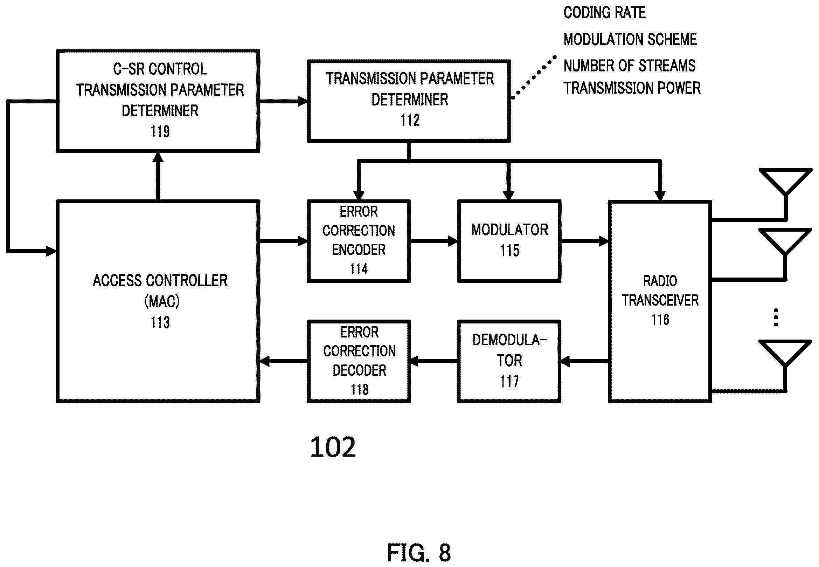

FIG. 8 is a block diagram illustrating a configuration example of communication apparatus 102.

Communication apparatus 102 illustrated in FIG. 8 may include, for example, C-SR control transmission parameter determiner 119, transmission parameter determiner 112, access controller 113, error correction encoder 114, modulator 115, radio transceiver 116, demodulator 117, and error correction decoder 118.

Communication apparatus 102 illustrated in FIG. 8 includes C-SR control transmission parameter determiner 119 instead of C-SR control transmission parameter estimator 111 compared to communication apparatus 101 illustrated in FIG. 7. In communication apparatus 102, configurations other than C-SR control transmission parameter determiner 119 may be the same as the configurations of communication apparatus 101 illustrated in FIG. 7.

C-SR control transmission parameter determiner 119 determines the transmission parameter for the C-SR control in accordance with the instruction from access controller 113 (e.g., including an information element for controlling the transmission parameter for the C-SR control). For example, C-SR control transmission parameter determiner 119 determines whether coordinated transmission using the transmission parameter for the coordinated communication transmitted from the coordinator node is possible (or whether participation in the C-SR communication (or simultaneous communication) is possible).

For example, in a case where C-SR control transmission parameter determiner 119 determines that coordinated communication is possible and communication apparatus 102 uses the transmission parameter, C-SR control transmission parameter determiner 119 outputs the information element for controlling the transmission parameter for the C-SR control to transmission parameter determiner 112. This enables, for example, control of the transmission processing in at least one of error correction encoder 114, modulator 115, and/or radio transceiver 116 via transmission parameter determiner 112.

In addition, for example, in a case where C-SR control transmission parameter determiner 119 determines that coordinated communication is possible and another node different from communication apparatus 102 uses the transmission parameter, C-SR control transmission parameter determiner 119 transmits the transmission parameter for the C-SR control or the information element for controlling the transmission parameter to the other node via access controller 113.

In addition, for example, in a case where C-SR control transmission parameter determiner 119 determines that the coordinated communication is not possible, C-SR control transmission parameter determiner 119 outputs information indicating that the coordinated communication is not possible to access controller 113. Accordingly, the information (determination result) indicating that the coordinated communication is not possible is transmitted to, for example, the coordinator node (e.g., communication apparatus 101).

Note that the operation of "determining whether the coordinated transmission using the transmission parameter for the coordinated communication is possible" may be read as "determining whether to perform the coordinated transmission (e.g., coordinated transmission by C-SR)."

### [Operation Example of C-SR Control]

Next, an operation example of the C-SR control will be described.

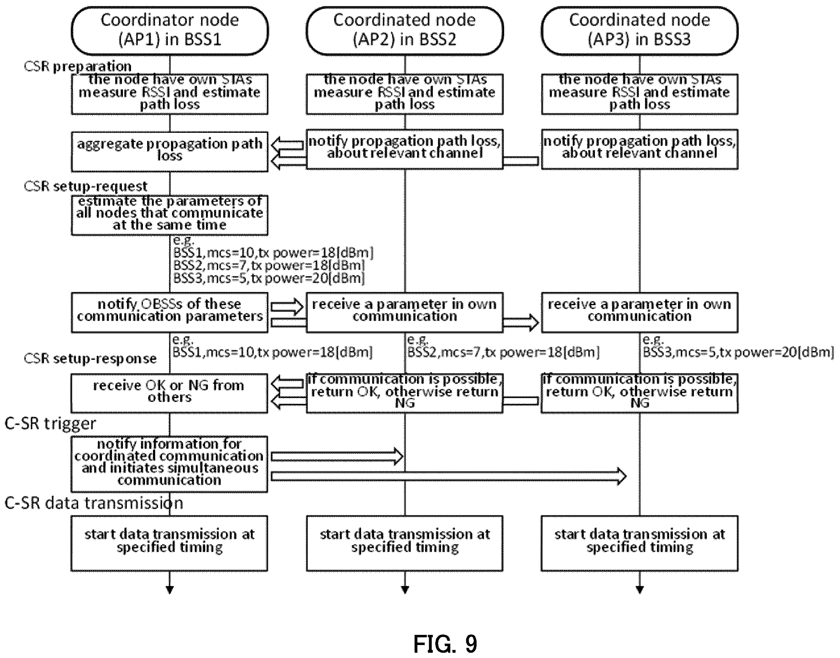

FIG. 9 illustrates an exemplary operation flow of the centralized C-SR control. In the example of FIG. 9, the number of APs and the number of BSSs are each three, and an operation example of each AP in each procedure illustrated in FIG. 3 is illustrated.

In addition, the coordinator node (AP1) in BSS1 illustrated in FIG. 9 may be, for example, AP1 illustrated in FIG. 4, and may include the configuration of communication apparatus 101 illustrated in FIG. 7. In addition, the coordinated node (AP2) in BSS2 and the coordinated node (AP3) in BSS3 illustrated in FIG. 9 are AP2 andAP3 illustrated in FIG. 4, respectively, and may each include the configuration of communication apparatus 102 illustrated in FIG. 8.

In FIG. 9, in the procedure of CSR preparation, the coordinator node collects information related to a propagation environment, such as a propagation path loss between nodes, from surrounding nodes.

In the procedure of CSR setup illustrated in FIG. 9, the coordinator node (e.g., C-SR control transmission parameter estimator 111 in FIG. 7) calculates (or estimates) transmission parameters used during coordinated communication. Here, the transmission parameters calculated by the coordinator node may include a transmission parameter used for communication in BSS1 controlled by the coordinator node and transmission parameters used for communication in the other BSSs (e.g., BBS2 and BBS3). For example, the calculated transmission parameter may be any one or a plurality of elements of parameters used for transmission, such as a coding rate, a modulation scheme, the number of streams, and transmission power.

In addition, the transmission power is, for example, an information element for calculating reception power together with the propagation path loss between nodes. The transmission parameter related to the transmission power may include, for example, a value including an antenna gain or a correction value corresponding to the antenna gain.

In addition, the transmission parameter is not limited to the coding rate, the modulation scheme, the number of streams, and the transmission power, and may be another parameter. For example, the transmission parameter may include band information of a transmission frequency, layer information, and a transmission timing.

In addition, as the calculated transmission parameter, an information element used for calculating the transmission parameter of another BSS may be included.

In a case where the communication in the BSS (e.g., BSS1) to which the coordinator node belongs during the coordinated communication is downlink communication in which the AP serves as a transmission node, the coordinator node outputs the calculated transmission parameter to transmission parameter determiner 112 and uses the calculated transmission parameter as the transmission parameter during the coordinated communication.

In addition, in a case where the communication in the BSS (e.g., BSS1) to which the coordinator node belongs during the coordinated communication is uplink communication in which the AP serves as a reception node, the coordinator node transmits the calculated transmission parameter to the transmission node during the coordinated communication.

In the procedure of CSR setup-request illustrated in FIG. 9, in a case where the transmission parameters for the coordinated communication calculated by the coordinator node are the transmission parameters used in BSS2 and BSS3, the coordinator node transmits the calculated transmission parameters (e.g., information related to the configuration of the coordinated communication) to the coordinated node (AP2) and the coordinated node (AP3).

The coordinated node (AP2) and the coordinated node (AP3) (e.g., C-SR control transmission parameter determiner 119 in FIG. 8) each determine whether transmission is possible using the transmission parameter for the coordinated communication received from the coordinator node. In a case where it is determined that the transmission is possible, the coordinated node (AP2) and the coordinated node (AP3) use the transmission parameters for the communication in respective BSSs.

In the procedure of CSR setup-response illustrated in FIG. 9, AP2 and AP3, which are coordinated nodes, transmit information including the determination result by C-SR control transmission parameter determiner 119 (e.g., information indicating whether transmission is possible using the received transmission parameter for the coordinated communication; e.g., OK or NG) to AP1, which is a coordinator node.

In the procedure of CSR setup-response, the information element transmitted from the coordinated node to the coordinator node may include, for example, information indicating whether transmission is possible using the transmission parameter for the coordinated communication received from the coordinator node (or the transmission parameter calculated using the information element used for calculating the transmission parameter for the coordinated communication) (or whether participation in the coordinated communication is possible). In addition, in the procedure of CSR setup-response, the information element transmitted from the coordinated node to the coordinator node may include an adjusted value of the transmission parameter on a coordinator node side used to realize the coordinated communication or a value for estimating the adjusted value.

In FIG. 9, at last, AP1, which is the coordinator node, determines nodes with which AP1 performs the coordinated communication, using the information elements that are received from the coordinated nodes and include the information on whether the coordinated communication in each BSS is possible, and executes the procedure of CSR trigger and the procedure of CSR transmission (CSR Data & ACK).

The operation example of the centralized type C-SR control has been described above.

Next, an operation example of the distributed C-SR control will be described.

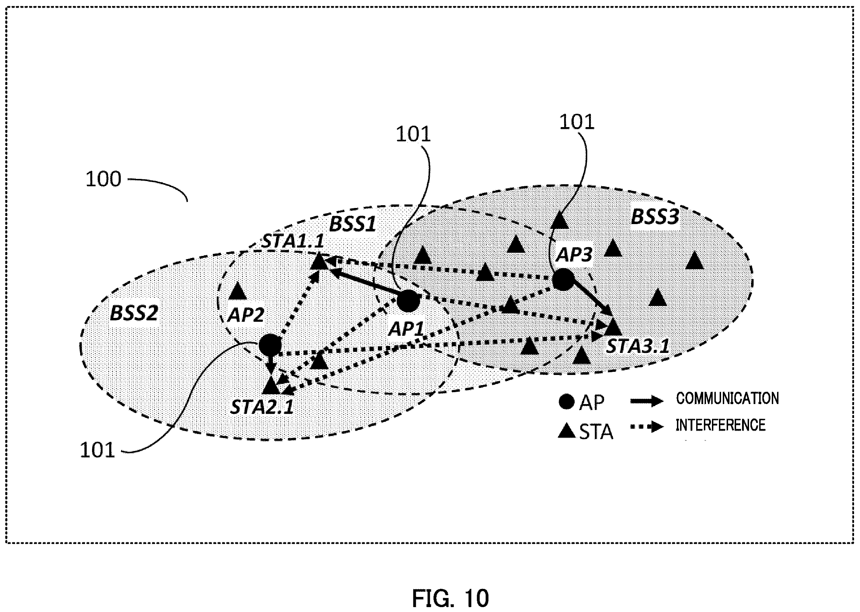

FIG. 10 illustrates an example of coordinated control in a radio communication system according to an exemplary embodiment of the present disclosure. In the example of FIG. 10, three BSSs (BSS1, BSS2, and BSS3) are controlled by three APs (AP1, AP2, and AP3) to constitute network 100, as in FIG. 4.

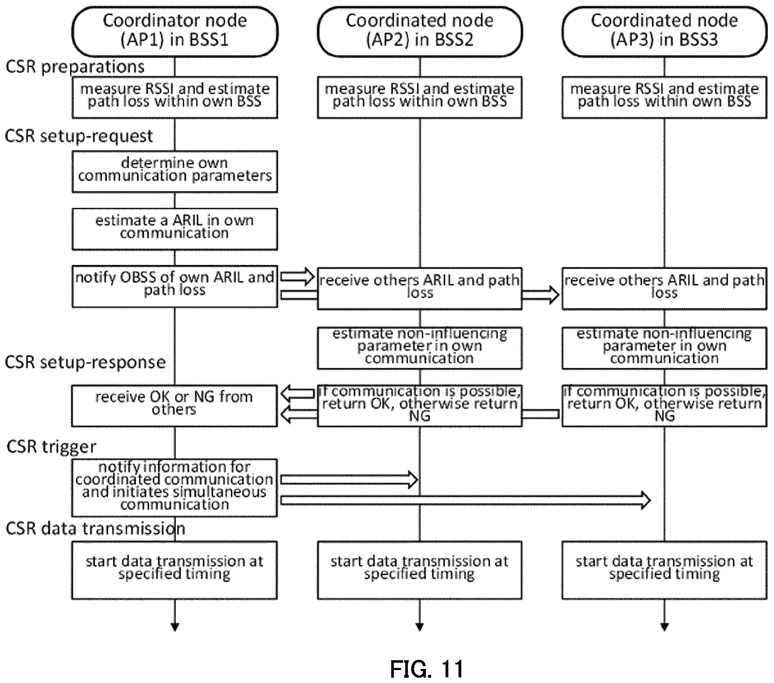

FIG. 11 illustrates an exemplary operation flow of the distributed C-SR control. In the example of FIG. 11, the number of APs and the number of BSSs are each three, and an operation example of each AP in each procedure illustrated in FIG. 3 is illustrated.

In addition, the coordinator node (AP1) in BSS1 illustrated in FIG. 11 may be, for example, AP1 illustrated in FIG. 10, and may include the configuration of communication apparatus 101 illustrated in FIG. 7. Furthermore, in addition to the configuration of communication apparatus 102 illustrated in FIG. 8, the coordinated node (AP2) in BSS2 and the coordinated node (AP3) in BSS3 illustrated in FIG. 11 may include C-SR control transmission parameter estimator 111 that estimates the transmission parameter for the C-SR control, similarly to AP1.

In FIG. 11, in the procedure of CSR preparation, the coordinator node and the coordinated node collect information related to the propagation environment, such as the propagation path loss between nodes that can be measured in the BSS to which each node belongs. The propagation path loss between nodes that can be measured in the BSS to which each node belongs may include, for example, a propagation path loss between the coordinated node and the node in another BSS.

In the procedure of CSR setup illustrated in FIG. 11, the coordinator node (e.g., C-SR control transmission parameter estimator 111 in FIG. 7) calculates (or determines) transmission parameters used during the coordinated communication. Here, the transmission parameters calculated by the coordinator node may include a transmission parameter used for communication in BSS1 controlled by the coordinator node. For example, the calculated transmission parameter may be any one or a plurality of elements of parameters used for transmission, such as a coding rate, a modulation scheme, the number of streams, and transmission power.

In addition, the transmission power is, for example, an information element for calculating reception power together with the propagation path loss between nodes. The transmission parameter related to the transmission power may include, for example, a value including an antenna gain or a correction value corresponding to the antenna gain.

In addition, the transmission parameter is not limited to the coding rate, the modulation scheme, the number of streams, and the transmission power, and may be another parameter. For example, the transmission parameter may include band information of a transmission frequency, layer information, and a transmission timing.

In a case where the communication in the BSS (e.g., BSS1) to which the coordinator node belongs during the coordinated communication is downlink communication in which the AP serves as a transmission node, the coordinator node outputs the calculated transmission parameter to transmission parameter determiner 112 and uses the calculated transmission parameter as the transmission parameter during the coordinated communication.

In addition, in a case where the communication in the BSS (e.g., BSS1) to which the coordinator node belongs during the coordinated communication is uplink communication in which the AP serves as a reception node, the coordinator node transmits the calculated transmission parameter to the transmission node during the coordinated communication.

In addition, the coordinator node calculates (or estimates), as the transmission parameter, an information element to be used for calculating the transmission parameter of another BSS. In the operation example of FIG. 11, an example of calculating an acceptable received interference level (ARIL) acceptable for a reception node is illustrated.

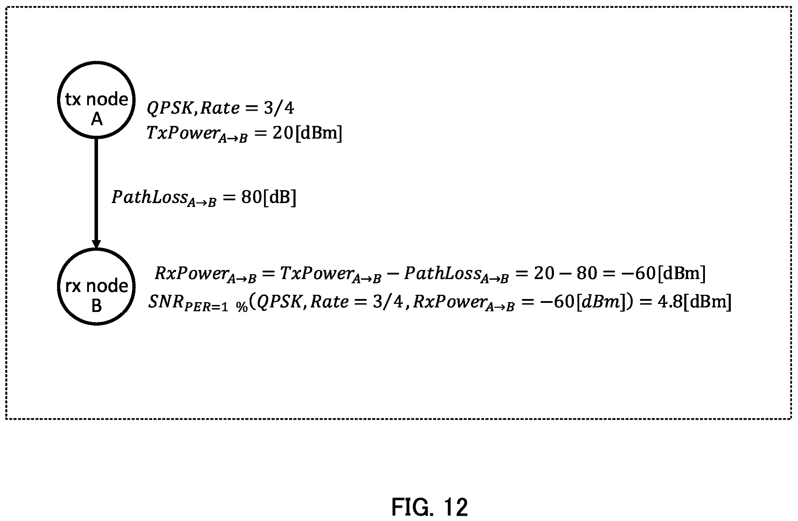

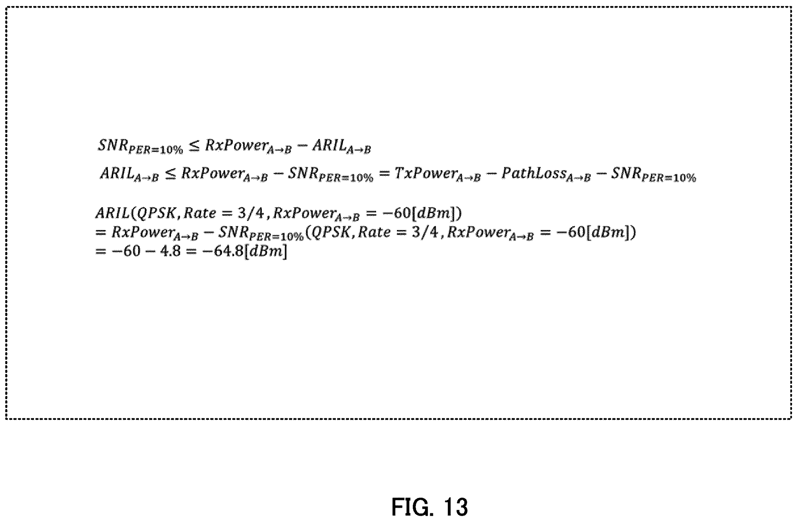

FIGS. 12 and 13 illustrates an example of a relationship between the ARIL and the transmission parameter. For example, as illustrated in FIG. 12, for a signal transmitted to reception node B, which has a propagation path loss value = 80[dB] from transmission node A, and transmitted using the transmission parameter illustrated in FIG. 12 (e.g., modulation scheme = QPSK, coding rate = 3/4, transmission power = 20 [dBm]), a reception power of - 60 [dBm] is expected. In a case where the value of the signal-to-noise ratio (SNR) satisfying PER ≤ 10% expected for each transmission parameter is preliminarily estimated to be 4.8 [dB], then, as shown in FIG. 13, the N value (noise term) obtained when the S value (signal term) is treated as the reception power (e.g., -60 [dBm]) may be treated as an ARIL (e.g., -64.8 [dBm]).

In the procedure of CSR setup-request illustrated in FIG. 11, the coordinator node transmits the calculated ARIL to the coordinated node (AP2) and the coordinated node (AP3). The coordinated node (AP2) and the coordinated node (AP3) (e.g., C-SR control transmission parameter estimator 111) each calculate a transmission parameter that allows the coordinated communication (or transmission parameter that does not cause interference), based on the information transmitted from the coordinator node (e.g., including the ARIL).

For example, a propagation path loss value acquired by the coordinated node in the procedure of CSR preparation may be used for calculating the transmission parameter at the coordinated node. In addition, for example, the coordinated node may also receive and use the propagation path loss value of the coordinator node when receiving the ARIL from the coordinator node.

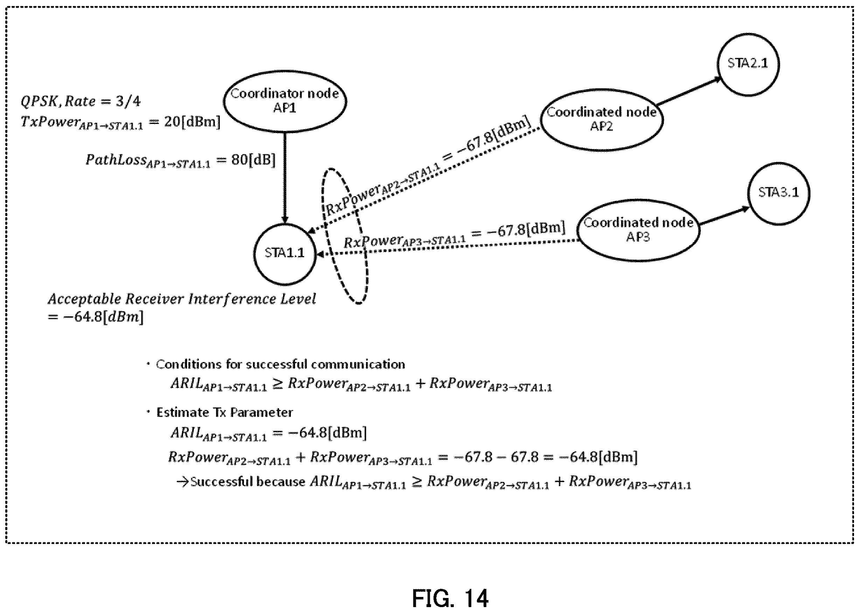

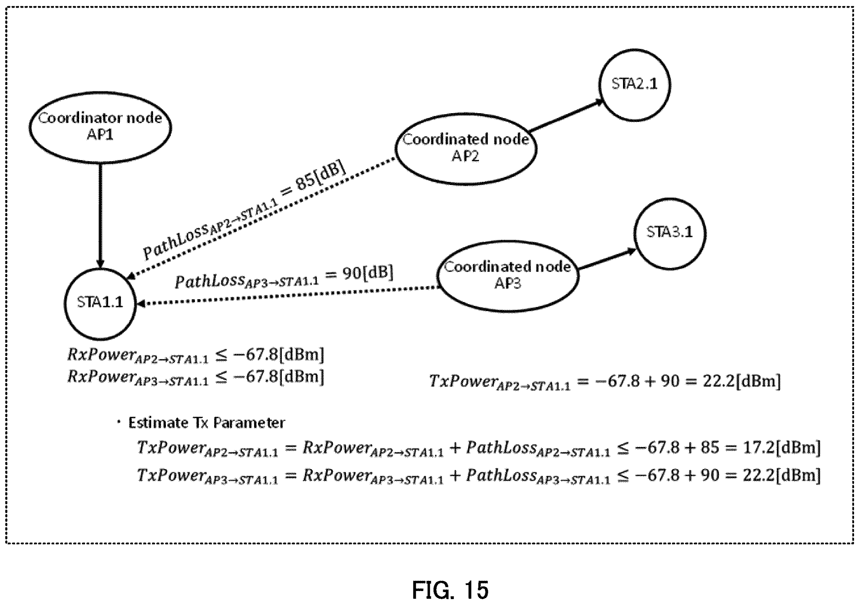

FIG. 14 illustrates an example of the ARIL estimated by the coordinator node and an amount of interference acceptable for the communication at the coordinated node, and FIG. 15 illustrates exemplary derivation of the transmission parameter (e.g., transmission power) calculated by the coordinated node based on the acceptable amount of interference.

As illustrated in FIG. 14, the ARIL (e.g., -64.8 [dBm]) estimated by the coordinator node is a sum of interference signals related to the coordinator node. Thus, as illustrated in FIG. 14, in a case where there is a plurality of transmission nodes (e.g., two nodes of AP2 and AP3 in FIG. 14) as interferers with respect to the coordinator node (e.g., AP1), the amount of interference acceptable for one coordinated node is reduced depending on the number of interferer nodes.

As illustrated in FIG. 15, the coordinated nodes (AP2 and AP3) each calculate (or estimate) the transmission power acceptable for the coordinated node based on the amount of interference acceptable for the coordinator node.

In FIG. 11, the ARIL is used as an example of the information indicated from the coordinator node to the coordinated node, but the present disclosure is not limited to this. For example, an acceptable value of the reception power assigned to each coordinated node illustrated in FIGS. 14 and 15 may be used, or an acceptable value of the transmission power obtained by adding the propagation path loss value for each coordinated node may be used.

In addition, the coordinated node (AP2) and the coordinated node (AP3) (e.g., C-SR control transmission parameter determiner 119) each determine whether transmission is possible using the calculated transmission parameter for the coordinated communication. In a case where it is determined that the transmission is possible, the coordinated node (AP2) and the coordinated node (AP3) each use the transmission parameter for the coordinated communication in the respective BSS.

In the procedure of CSR setup-response illustrated in FIG. 11, AP2 and AP3, which are coordinated nodes, transmit information including the determination result by C-SR control transmission parameter determiner 119 (e.g., information indicating whether transmission is possible using the calculated transmission parameter for the coordinated communication; e.g., OK or NG) to AP1, which is a coordinator node.

In the procedure of CSR setup-response, the information element transmitted from the coordinated node to the coordinator node may include, for example, information indicating whether transmission is possible using the transmission parameter calculated by the coordinated node (or whether participation in the coordinated communication is possible). In addition, in the procedure of CSR setup-response, the information element transmitted from the coordinated node to the coordinator node may include an adjusted value of the transmission parameter on a coordinator node side used to realize the coordinated communication or a value for estimating the adjusted value.

In FIG. 11, at last, AP1, which is the coordinator node, determines nodes with which AP1 performs the coordinated communication, using the information elements that are received from the coordinated node and include the information on whether the coordinated communication in each BSS is possible, and executes the procedure of CSR trigger and the procedure of CSR transmission (CSR Data & ACK).

The operation example of the distributed C-SR control has been described above.

As described above, the coordinated node receives information (e.g., estimated value of the transmission parameter for the coordinated communication) related to the configuration of the C-SR control (e.g., configuration of the coordinated communication) from the coordinator node, and transmits, to the coordinator node, information (e.g., OK or NG) related to the determination result indicating whether transmission is possible using the transmission parameter for the coordinated communication (or whether participation in the coordinated communication is possible). Then, the coordinator node determines nodes with which the coordinator node performs the coordinated communication (e.g., C-SR communication) based on the information related to the determination results from the coordinated nodes.

This allows the coordinator node to appropriately select a node that participates in the coordinated communication based on the response from the coordinated nodes, in the C-SR control in the Multi-AP environment, thereby improving the efficiency of the coordinated communication. Therefore, in the C-SR control in the Multi-AP environment, it is possible to calculate the transmission parameter based on the propagation environment and to realize the coordinated communication with high throughput or low delay.

In the following, each embodiment related to the operation example of the coordinated communication described above will be described.

### (Embodiment 1)

In the present embodiment, the coordinated node determines whether participation in the coordinated communication is possible (determination of OK or NG), based on the information indicated from the coordinator node, and transmits (or responds with) the determination result to the coordinator node.

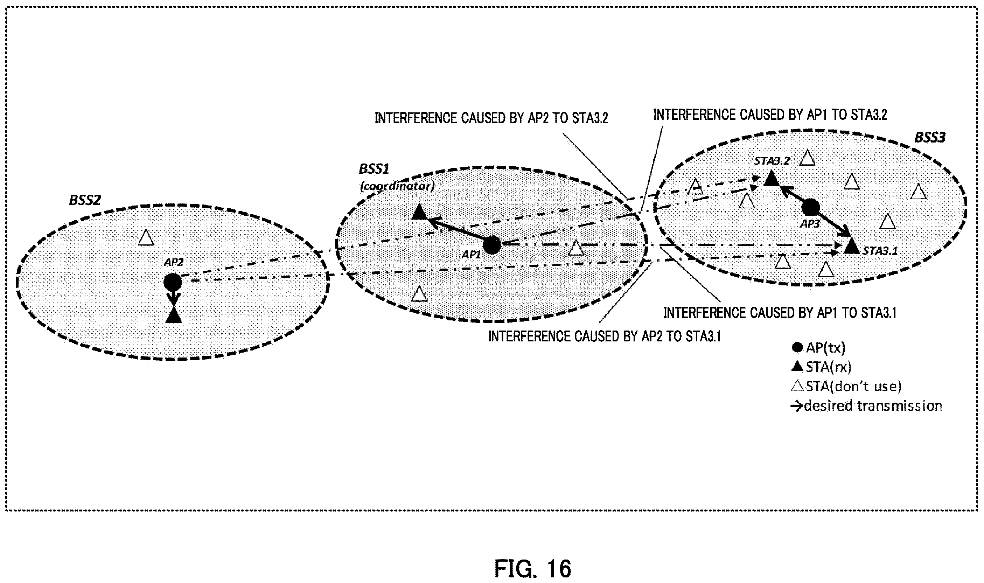

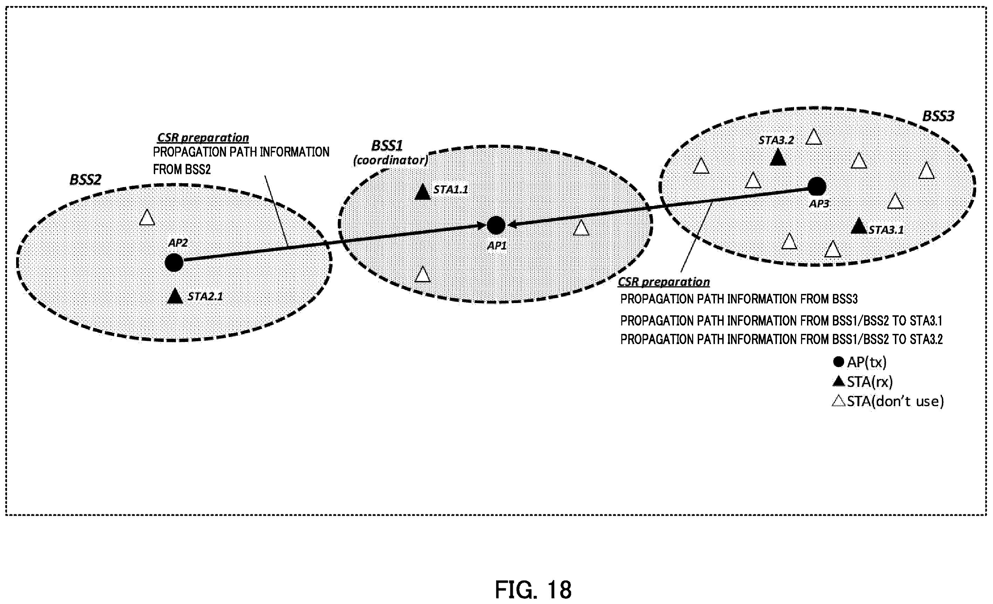

FIG. 16 illustrates an example of a network composed of three BSSs. In FIG. 16, one AP and at least one STA may be present in one BSS. In the example of FIG. 16, AP1 in BSS1 is a coordinator node and performs centralized C-SR control. FIGS. 18 to 21 illustrate simple operation examples of the procedures illustrated in FIG. 3.

In addition, in the example of FIG. 16, one desired communication path (or preferred communication path) is configured in BSS1 and BSS2 each. Meanwhile, in the example of FIG. 16, two desired communication paths of "communication from AP3 to STA3.1" and "communication from AP3 to STA3.2" are configured in BSS3.

The "communication path" may herein be a set of a transmission source node (STA or AP) and a transmission destination node (STA or AP). In addition, the "communication path" may be a combination of information indicating a downlink (DL) or an uplink (UL) and information on a communication destination node (e.g., non-AP STA). Furthermore, a state in which the "desired communication path" is present may be a state in which the transmission source node holds transmission data (also referred to as traffic or buffer) for the transmission destination node. Moreover, for example, a state in which a certain node (e.g., AP) receives a buffer status report from another node (e.g., STA) and specifies that the other node holds the transmission data may be referred to as a state in which the "desired communication path" is present.

Each node receives interference from a transmission node in a different BSS (AP in the example of FIG. 16). Therefore, in the example of FIG. 16, in BSS3 having two candidates for a reception node, there are also two candidates for an interference path. In addition, even when there is no change in communication parameters of BSS1 and BSS2, in BSS3, the communication with STA3.1 and the communication with STA3.2 may be affected by interference different from each other.

For example, AP1 (coordinator AP), which is a coordinator node, determines a combination of paths in which the coordinated communication under the C-SR control can be performed (e.g., combination of nodes performing simultaneous communication), among four desired communication paths illustrated in FIG. 16.

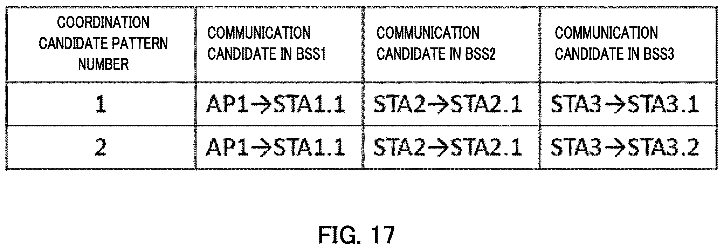

In the example of FIG. 16, two combinations (e.g., also referred to as coordination candidate patterns or coordination patterns), each including a different communication candidate in BSS3, are assumed as illustrated in FIG. 17.

In these two combinations of coordination candidates, the interference paths are different between a case of communicating with STA3.1 (coordination candidate pattern number 1) and a case of communicating with STA3.2 (coordination candidate pattern number 2) in BSS3. Thus, as illustrated in FIG. 18, there are two possible cases for the information element (e.g., propagation path information) acquired by the coordinator node in the procedure of CSR preparation: a case of communicating with STA3.1; and a case of communicating with STA3.2.

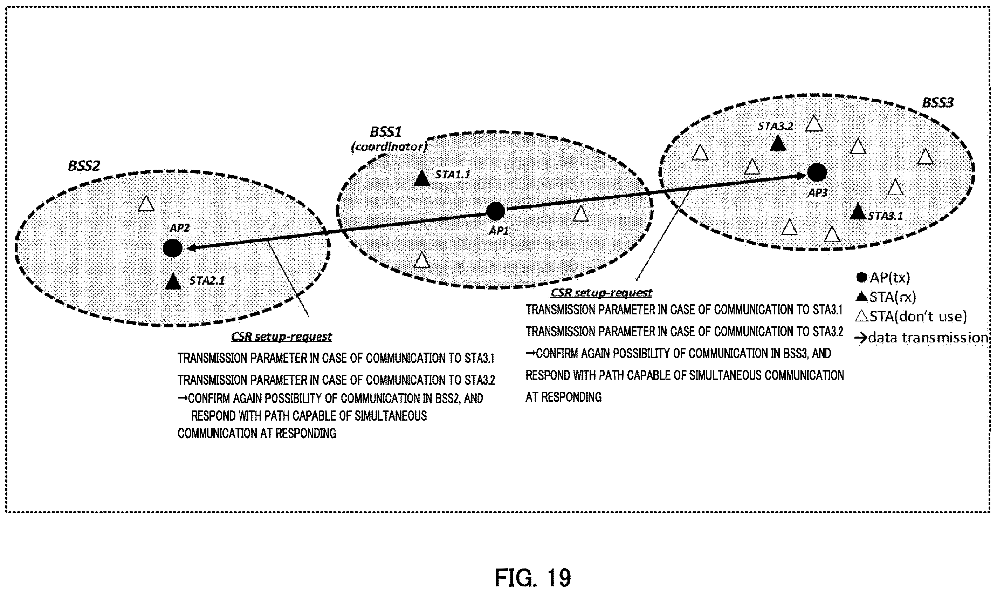

In addition, as illustrated in FIG. 19, in the procedure of CSR setup-request, the coordinator node (AP1) estimates the transmission parameter in each BSS for each of two combinations of coordination candidates (a coordination candidate pattern in the case of communicating with STA3.1 and a coordination candidate pattern in the case of communicating with STA3.2), and indicates the estimated transmission parameters to the coordinated nodes of AP2 and AP3.

The coordinated nodes (e.g., AP2 and AP3) each determine whether communication in the BSS to which the coordinated node belongs is possible (or whether the communication is established) based on the two types of transmission parameters received from the coordinator node (e.g., AP1). The determination may be based on, for example, propagation path information between the transmission node and the reception node in the BSS to which the coordinated node belongs, the modulation scheme during transmission, the coding rate, the stream information, the transmission power, or the amount of interference received by the reception node, or information depending on another propagation environment may be used. For example, the amount of interference received by the reception node may include either or both of the interference received from the BSS which is a coordination target, and the interference received from a BSS different from the BSS which is the coordination target.

In addition, because the information depending on the propagation environment may vary over time, the information depending on the propagation environment used for estimating the transmission parameter in the procedure of CSR setup may be information closer in time that has varied from a point in time of the procedure of CSR preparation.

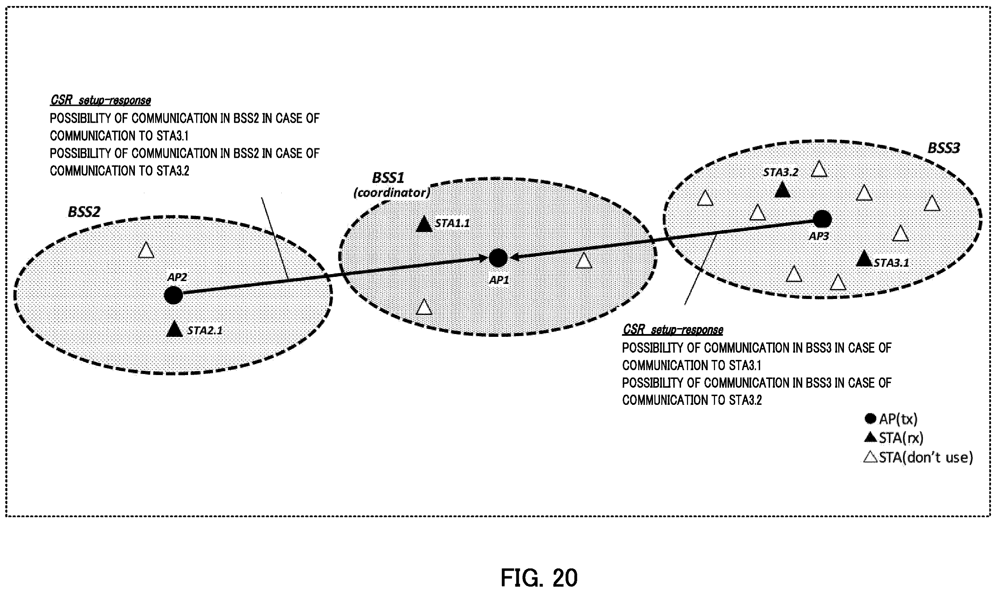

Furthermore, as illustrated in FIG. 20, in the procedure of CSR setup-response, the coordinated node determines (or confirms) whether the communication in the BSS to which the coordinated node belongs is established in a case where the transmission parameter received from the coordinator node is used, and then transmits the determination result to the coordinator node. The coordinator node acquires the information related to whether coordinated communication is possible for each of two combinations of coordination candidates from each coordinated node. Then, the coordinator node recognizes a combination of coordination candidates for which coordinated communication is possible, and determines a communication path during the coordinated communication.

For example, in a case where improvement of a throughput value is intended for the coordinated communication, the coordinator node (AP1) may calculate a total of throughput values expected for three communications during the coordinated communication for each of the two coordination candidates, and select a coordination candidate with which a higher throughput value is obtained. In addition, for example, in a case where low delay of communication is intended for the coordinated communication, the coordinator node may select a coordination candidate including a communication path required to have lower delay.

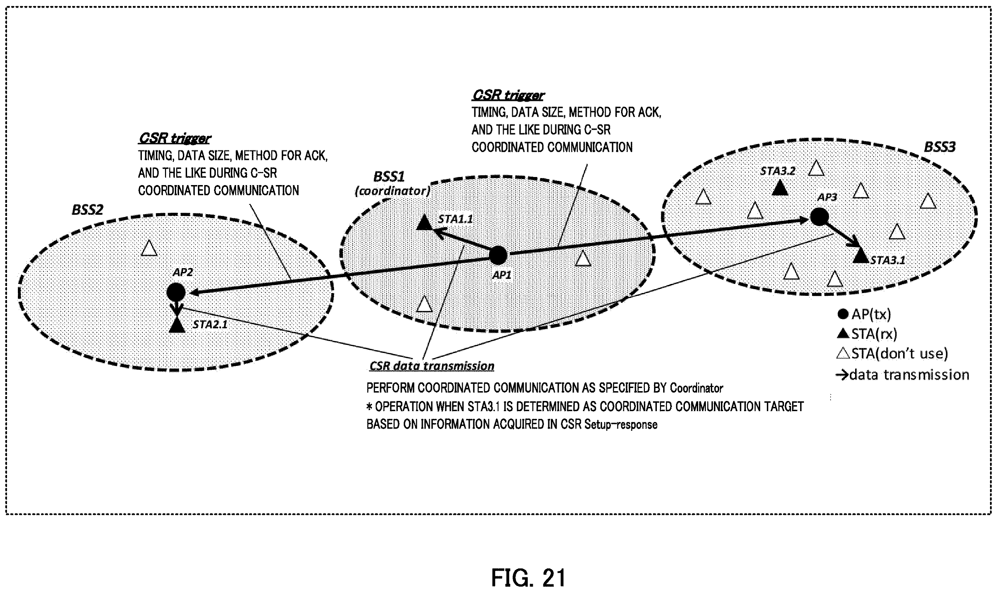

FIG. 21 exemplarily illustrates an operation example in the procedure of CSR trigger and the procedure of CSR transmission in a case where a communication path with STA3.1 as a reception node is selected as a communication path in BSS3 during the coordinated communication.

The operation example in the network composed of three BSSs illustrated in FIG. 16 has been described above.

Note that the number of BSSs constituting the network is not limited to three, and may be two or four or more.

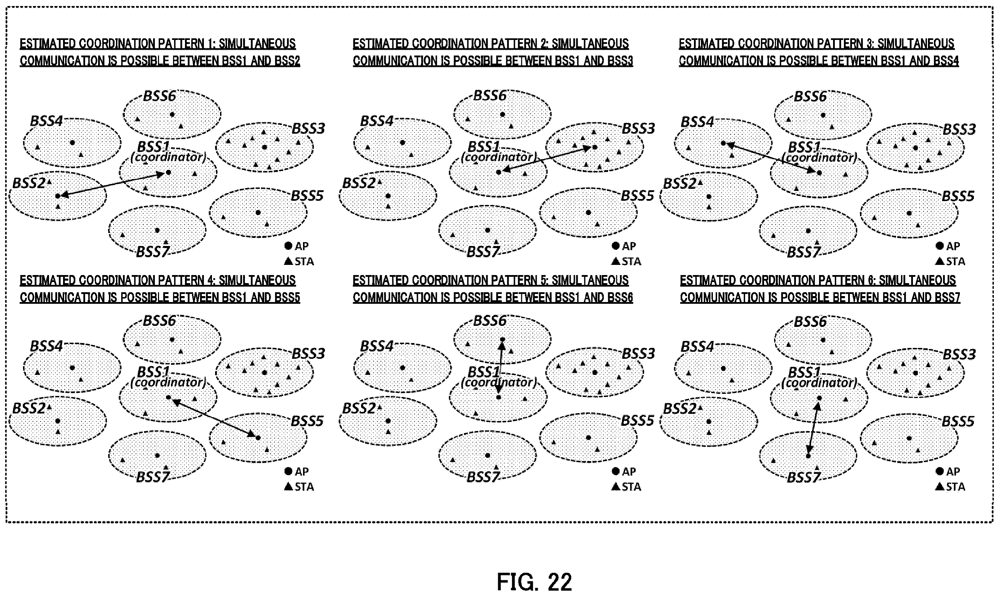

FIG. 22 illustrates an example of a case where two BSSs perform the coordinated communication in a network composed of seven BSSs.

In the example of FIG. 22, as a result of determining whether coordinated communication is possible in each of seven BSSs, six coordination patterns (estimated coordination patterns 1 to 6) are estimated. In the example of FIG. 22, a node in BSS1 is the coordinator, and the coordinated communication is performed between the communication of BSS1 and the communication of another BSS different from BSS1.

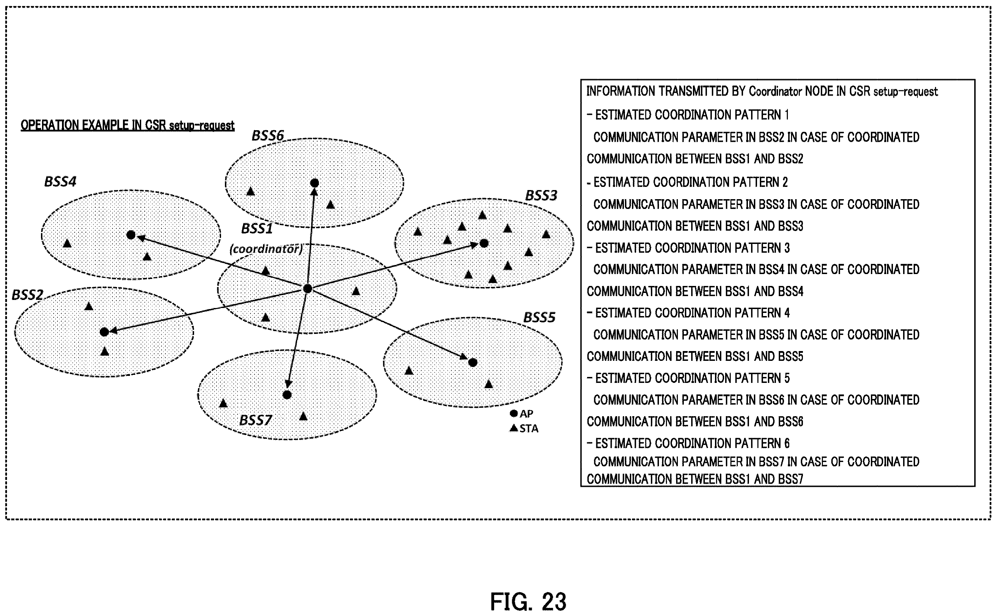

FIGS. 23, 24, and 25 illustrate an operation example in the procedure of CSR setup (the procedure of CSR setup-request and the procedure of CSR setup-response) and the procedure of CSR trigger in a case where two coordinated BSSs are selected from seven BSSs as described above.

For example, as illustrated in FIG. 23, in the procedure of CSR setup-request, the AP of BSS1, which is the coordinator node, transmits, to other BSSs, estimation results of the transmission parameters (also referred to as communication parameters) in respective BSSs when each BSS and BSS1 perform the coordinated communication. For example, the coordinator node transmits the estimation results of six coordination patterns to each coordinated node. Then, each coordinated node acquires the transmission parameter for the BSS to which the coordinated node belongs.

When the coordinated node receives the transmission parameter for the coordinated communication from the coordinator, the coordinated node determines (or confirms) whether the coordinated communication between the BSS to which the coordinated node belongs and BSS1 is possible (or whether the coordinated communication is established, or whether participation in the coordinated communication is possible), using the received transmission parameter. The determination may be based on, for example, propagation path information between the transmission node and the reception node in the BSS to which the coordinated node belongs, the modulation scheme during transmission, the coding rate, the stream information, the transmission power, or the amount of interference received by the reception node, or the information depending on another propagation environment may be used. For example, the amount of interference received by the reception node may include either or both of the interference received from the BSS which is a coordination target and the interference received from a BSS different from the BSS which is the coordination target.

In addition, because the information depending on the propagation environment may vary over time, the information depending on the propagation environment used for estimating the transmission parameter in the procedure of CSR setup may be information closer in time that has varied from a point in time of the procedure of CSR preparation.

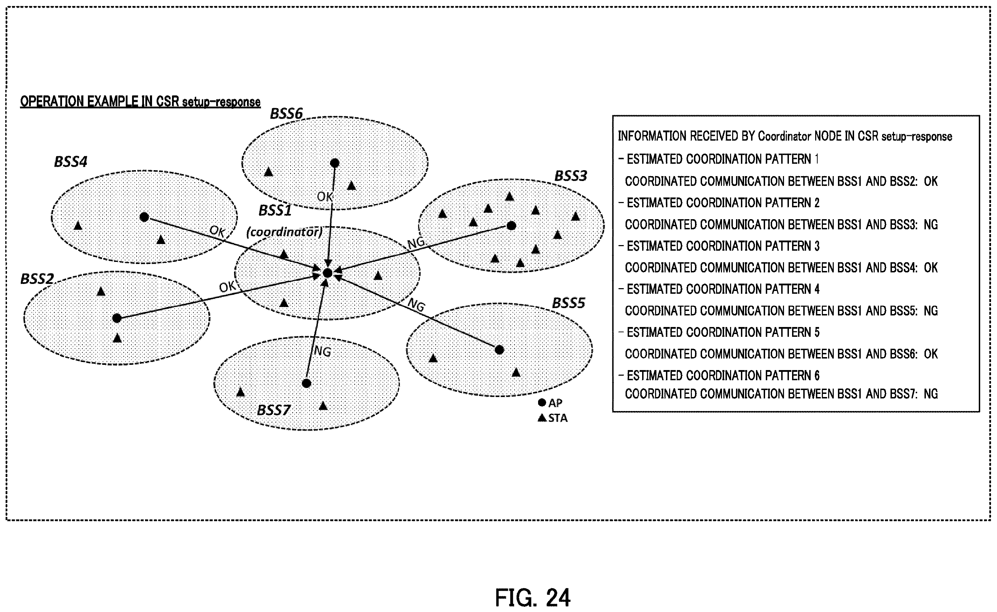

FIG. 24 illustrates an operation example in which the AP in each BSS (BSS2 to BSS7) that is a coordinated node reports, to the coordinator node (e.g., AP of BSS1), a determination result (or confirmation result; e.g., OK or NG) of whether the coordinated communication with BSS1 is established in each BSS in the procedure of CSR setup-response. In the example of FIG. 24, it is determined that the coordinated communication with BSS1 is possible in BSS2, BSS4, and BSS6, and response indicating that participation in the coordinated communication is OK is performed. In addition, in the example of FIG. 24, it is determined that the coordinated communication with BSS1 is not possible in BSS3, BSS5, and BSS7, and response indicating that participation in the coordinated communication is NG is performed.

The determination result (OK or NG) of whether to participate in the coordinated communication reported from the coordinated node to the coordinator node may be transmitted using, for example, a method allowing the coordinator node to recognize the OK or the NG. For example, a method is employed in which a specific bit or bit sequence is assigned to each of the OK and the NG. Furthermore, for example, a period for communicating OK may be preconfigured, and the coordinator node may determine OK in a case where a signal is received from the coordinated node within the period, and determine NG in a case where a signal is not received from the coordinated node within the period.

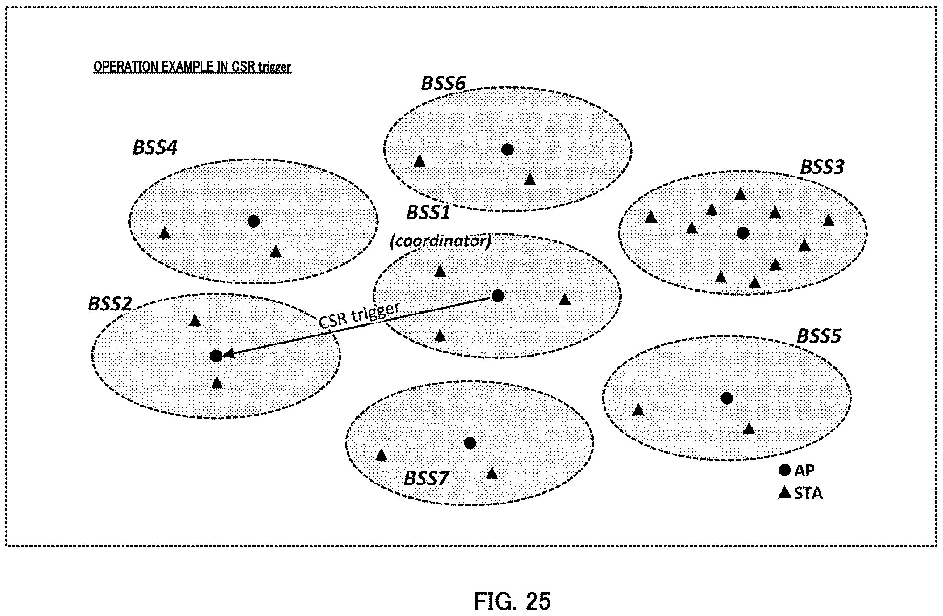

FIG. 25 illustrates an operation example in which the BSS to be actually coordinated is selected and the procedure of CSR trigger is executed based on the information related to whether coordinated communication is possible (OK or NG) collected by the coordinator node in the procedure of CSR setup.

In the procedure of CSR setup, the coordinator node is reported that the BSSs that can perform the coordinated communication with BSS1 are three BSSs of BSS2, BSS4, and BSS6. Because the determination of whether coordinated communication is possible is a determination on the coordination pattern estimated based on a condition for performing the coordinated communication in two BSSs including BSS1, the coordinator node selects one BSS that actually performs the coordinated communication among a plurality of coordination patterns reported as being capable of performing the coordinated communication. The example of FIG. 25 shows an operation example in which BSS2 is selected as the BSS that performs the coordinated communication with BSS1. As illustrated in FIG. 25, the coordinator node transmits an instruction (procedure of CSR trigger) for the coordinated communication to the coordinated node of BSS2.

The example in a case where two BSSs perform the coordinated communication in the network composed of seven BSSs has been described above.

Next, an example in a case where four BSSs perform the coordinated communication in the network composed of seven BSSs will be described.

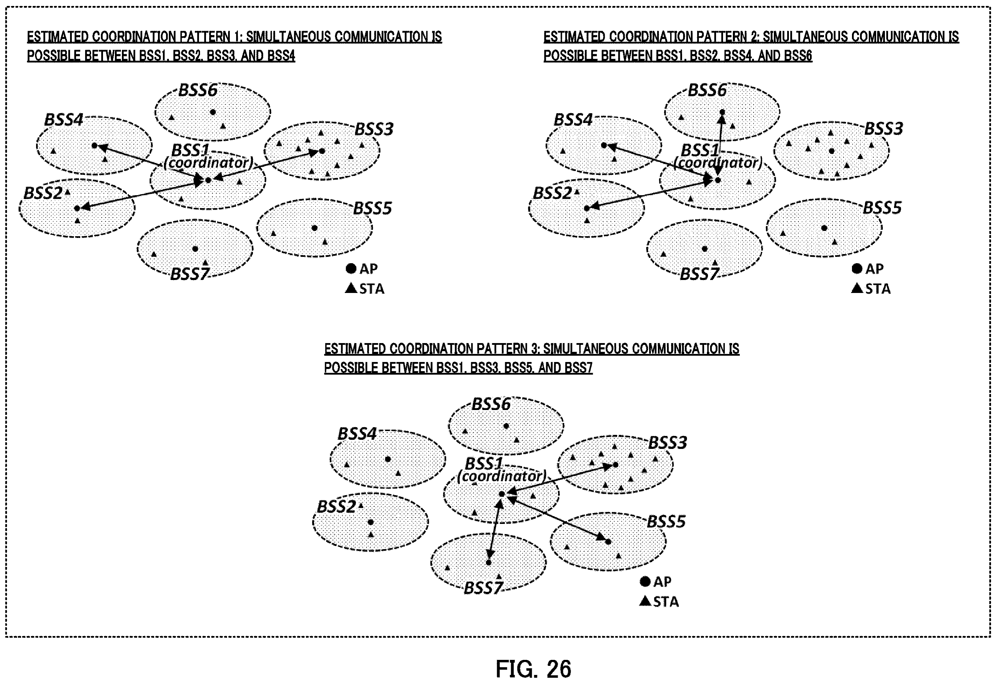

In this case, as illustrated in FIG. 26, as a result of determining whether coordinated communication is possible for seven BSSs (BSS1 to BSS7), three coordination patterns are estimated (estimated coordination patterns 1 to 3). Note that, in the example of FIG. 26, the node of BSS1 is the coordinator node, and coordination is performed between the communication of BSS1 and the communication of the other three BSSs different from BSS1.

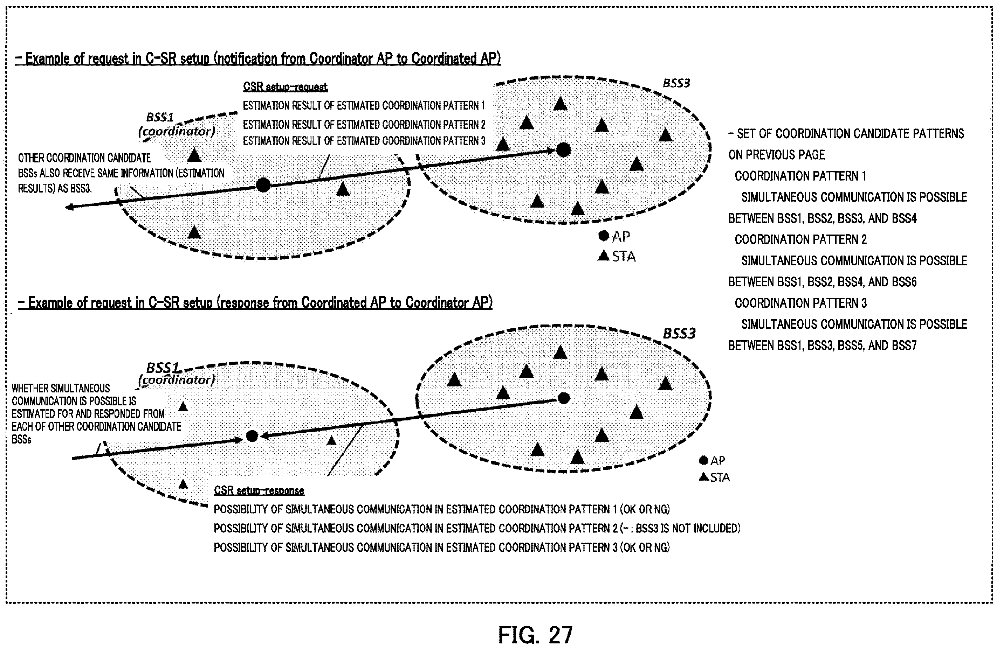

FIG. 27 illustrates an operation example of the procedure of CSR setup in BSS1 and BSS3 in a case where four BSSs to be coordinated are selected from seven BSSs as described above.

For example, as illustrated in FIG. 27, in the procedure of CSR setup-request, the AP of BSS1, which is the coordinator node, transmits the transmission parameters (estimation results of the transmission parameters) used in the three coordination patterns to the coordinated nodes (e.g., including the AP of BSS3). The coordinated nodes each determines whether coordinated communication is possible (whether the coordinated communication is established, or whether participation in the coordinated communication is possible) using the transmission parameter corresponding to the coordination pattern including the BSS to which the coordinated node belongs, among the transmission parameters of the received coordination patterns. In the determination, for example, propagation path information between the transmission node and the reception node in the BSS to which the coordinated node belongs, the modulation scheme during transmission, the coding rate, the stream information, the transmission power, or the amount of interference received by the reception node may be used, or information depending on another propagation environment may be used. For example, the amount of interference received by the reception node may include either or both of the interference received from the BSS which is a coordination target and the interference received from a BSS different from the BSS which is a coordination target.

In addition, since the information depending on the propagation environment may vary over time, the information depending on the propagation environment used for estimating the transmission parameter in the procedure of CSR setup may be information closer in time that has varied from a point in time of the procedure of CSR preparation.

In addition, as illustrated in FIG. 27, in the procedure of CSR setup-response, the APs that are the coordinated nodes (e.g., including the AP of BSS3) each report, to the coordinator node, the determination result of whether coordinated communication is possible for each of the coordination patterns.

In the example of FIG. 27, BSS3 is included in coordination pattern 1 and coordination pattern 3. Thus, the AP of BSS3 determines whether coordinated communication is possible for coordination pattern 1 and coordination pattern 3, and reports the determination result to the coordinator node (e.g., the AP of BSS1). On the other hand, the AP of BSS3 is not required to respond regarding whether coordinated communication is possible for coordination pattern 2, as BSS3 is not included in coordination pattern 2.

The coordinator node confirms the responses from the BSSs which are coordination targets including BSS3, and selects the BSS that performs the coordinated communication from the coordination patterns in which coordinated communication is possible.

The example in a case where four BSSs perform the coordinated communication in the network composed of seven BSSs has been described above.

Note that the number of BSSs constituting the network and the number of BSSs performing the coordinated communication are not limited to the numbers in the above-described example, and may be other numbers. In addition, the coordinator node may select one coordination pattern from among a plurality of coordination patterns, may select any of a plurality of coordinated nodes based on the information reported from each coordinated node, or may perform communication without coordination.

As described above, in the present embodiment, the coordinated node determines whether participation in the coordinated communication (OK or NG) is possible, based on the information received from the coordinator node, and responds with the determination result to the coordinator node. For example, in a case where there are a plurality of coordination patterns, in the procedure of CSR setup-request, the information notified from the coordinator node to the coordinated node includes information related to a configuration for each of a plurality of coordination patterns indicating candidates for a combination of nodes that perform the coordinated communication (e.g., simultaneous communication), and in the procedure of CSR setup-response, the information reported from the coordinated node to the coordinator node includes a determination result of whether coordinated communication is possible for each of the plurality of coordination patterns. As a result, for example, the coordinator node can collect the determination results of whether coordinated communication is possible for the plurality of coordination patterns at once. Accordingly, in the present embodiment, for example, appropriately selecting the coordination pattern that realizes high throughput or low delay makes it possible to perform the coordinated communication based on the purpose of communication. Therefore, according to the present embodiment, it is possible to improve the efficiency of the transmission control (e.g., C-SR control) in the radio communication.

### (Embodiment 2)

In the present embodiment, the coordinated node transmits information indicating a value notified to the coordinated node by the coordinator node, in addition to the response (e.g., determination result of whether participation in the coordinated communication is possible (OK or NG)) transmitted to the coordinator node.

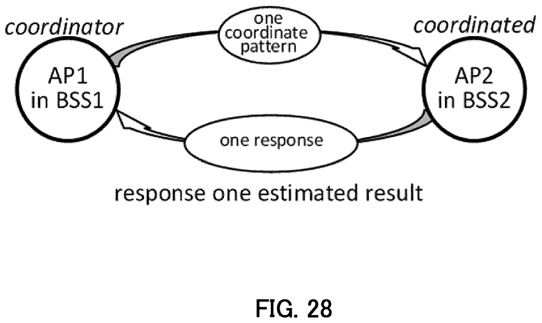

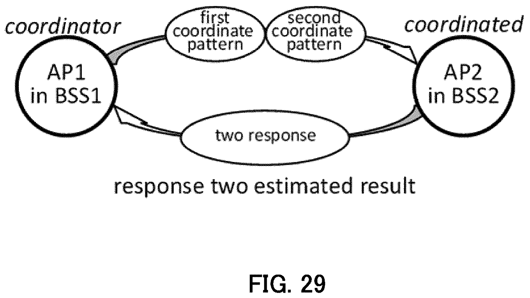

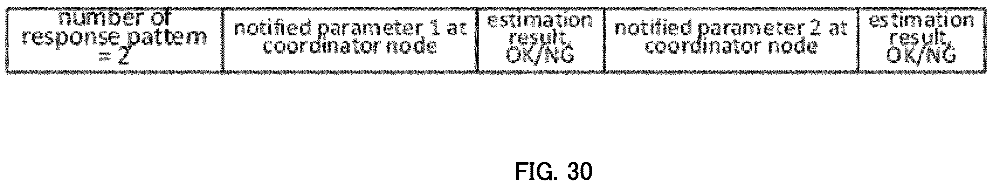

FIG. 28 illustrates an example of notification and response in a case where the information responded from the coordinated node has one pattern. FIG. 29 illustrates an example of notification and response in a case where the information responded from the coordinated node has two patterns. In addition, FIG. 30 illustrates a format example used when the coordinated node responds.

In the present embodiment, similarly to Embodiment 1, in the C-SR control performed on the plurality of BSSs in the Multi-AP environment, a plurality of coordination patterns may be estimated, and whether coordinated communication is possible (whether participation in the coordinated communication is possible) may be determined for each of the plurality of coordination patterns. The coordinated node receives information (e.g., estimation results of the transmission parameters) related to the plurality of coordination patterns from the coordinator node, and responds to the coordinator node with the determination result of whether coordinated communication is possible for each coordination pattern.

As illustrated in FIG. 28, in a case where there is one coordination pattern, the response from the coordinated node may have one pattern. In addition, as illustrated in FIG. 29, in a case where there are two coordination patterns, the response from the coordinated node may have two patterns. For example, in a case where there are two coordination patterns, the format example illustrated in FIG. 30 may be applied. The format illustrated in FIG. 30 includes information (e.g., coordination pattern number) for identifying the plurality of coordination patterns. This makes it possible to explicitly indicate, to the coordinator node, which coordination pattern each response is for. In the example of FIG. 30, for coordination pattern 1, the coordinated node transmits, to the coordinator node, the transmission parameter (e.g., notified parameter 1 at coordinator node) and the determination result (estimation result OK/NG) of whether the coordinated communication by coordination pattern 1 is possible. In addition, in the example of FIG. 30, for coordination pattern 2, the coordinated node transmits, to the coordinator node, the transmission parameter (e.g., notified parameter 2 at coordinator node) and the determination result (estimation result OK/NG) of whether the coordinated communication by coordination pattern 2 is possible.

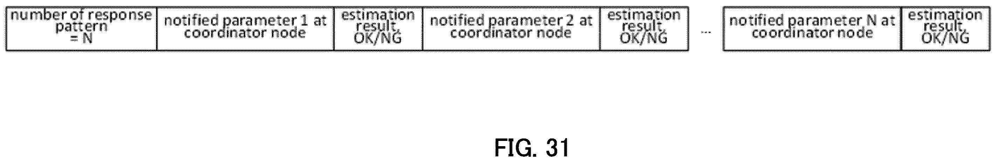

Note that the format of the response may be, for example, a format in which the responses corresponding to the number of coordination patterns are reported. For example, as illustrated in FIG. 31, in a case where there are N patterns for the coordination patterns, a format including responses for N patterns may be used.

In addition, in a case where there is a coordination pattern that is not used in a certain coordinated node (coordination pattern that does not include the BSS to which the coordinator node belongs) (e.g., the example of FIG. 27 described above) among the plurality of coordination patterns indicated from the coordinator node to the coordinated nodes, the response need not include information related to the coordination pattern.

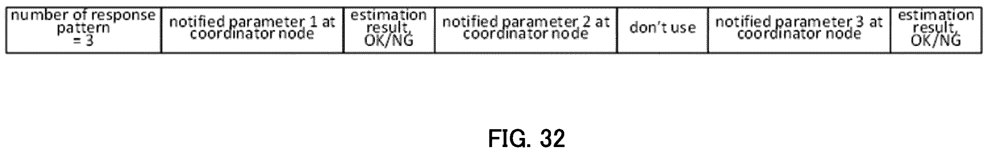

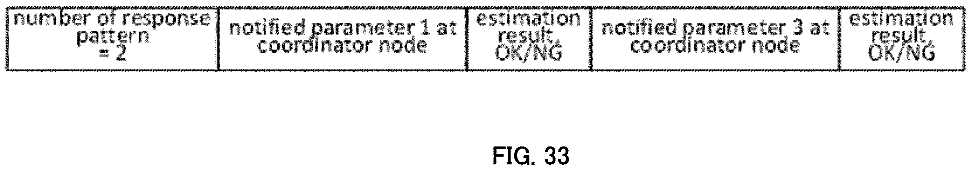

FIGS. 32 and 33 illustrate exemplary formats in a case where the AP (coordinated node) of BSS3 responds in the coordination patterns (coordination patterns 1 to 3) illustrated in FIGS. 26 and 27.

In FIG. 27, the AP of BSS3, which is the coordinated node, receives three coordination patterns from the coordinator node. Among the three coordination patterns, there are two patterns that include BSS3 (coordination patterns 1 and 3).

In this case, BSS3, which is the coordinated node, may report the response to each of the three coordination patterns to the coordinator node, for example, as illustrated in FIG. 32. However, as illustrated in FIG. 32, for coordination pattern 2 not including BSS3, the determination result (OK/NG) of whether coordinated communication is possible need not be indicated (need not be used).

Alternatively, for example, as illustrated in FIG. 33, BSS3, which is the coordinated node, may transmit, to the coordinator node, a response that includes information on coordination patterns 1 and 3 including BSS3 and does not include information on coordination pattern 2 not including BSS3.

As described above, according to the present embodiment, information related to the value indicated from the coordinator node to the coordinated node is added to the response including the determination result of whether coordinated communication is possible, which is transmitted from the coordinated node to the coordinator node. For example, the response including the determination result of whether coordinated communication is possible may include information for identifying the plurality of coordination patterns. As a result, in a case where the coordinator node requests to configure the coordinated communication (e.g., CSR setup) with the plurality of coordination patterns, the coordinator node can appropriately recognize the coordination pattern for which the coordinated communication is determined to be possible, and can select the coordination pattern in which coordinated communication is possible.

### (Embodiment 3)

In the present embodiment, the coordinated node transmits information indicating the value indicated by the coordinator node or information related to an order (e.g., reception order) in which information corresponding to the plurality of coordination patterns is mapped in the information indicated by the coordinator node, in addition to the response (e.g., whether participation in the coordinated communication is possible (OK or NG)) transmitted to the coordinator node.

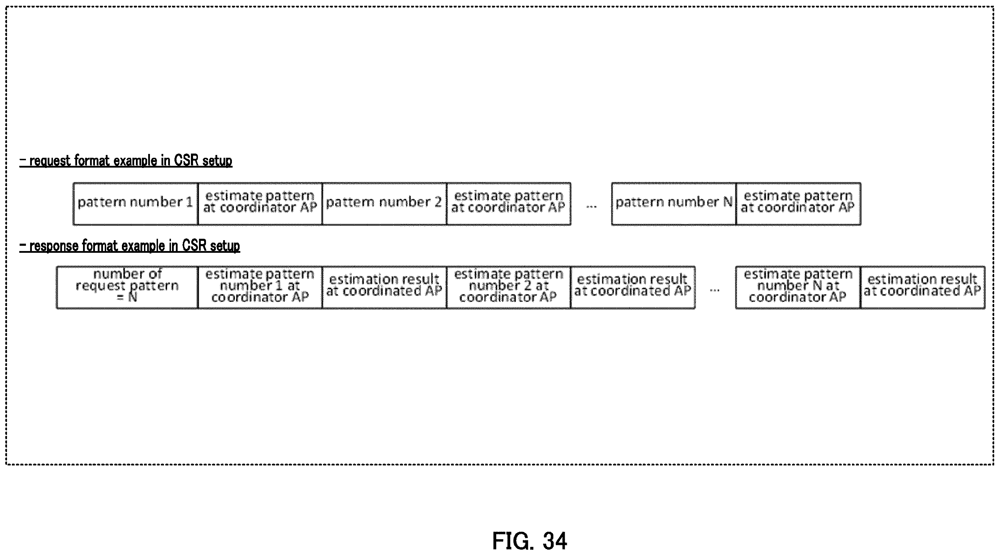

FIG. 34 illustrates a format example of the response transmitted from the coordinated node in a case where the coordination pattern number (pattern number) is transmitted when the coordinator node indicates the coordination patterns to the coordinated node. As illustrated in FIG. 34, the format of the response transmitted from the coordinated node includes the coordination pattern number (estimate pattern number) transmitted from the coordinator node. That is, the coordinated node includes, in the response, the coordination pattern number indicated by the coordinator node in the procedure of CSR setup-request, and transmits the response in the procedure of CSR setup-response.

This allows the coordinator node to distinguish which coordination pattern the determination result of whether to participate in the coordinated communication transmitted from the coordinated node to the coordinator node is for, based on the coordination pattern number included in the response. Thus, the coordinator node can appropriately select the coordination pattern in which coordinated communication is possible.

Here, the transmission parameter related to the coordination pattern indicated to the coordinated node by the coordinator node is a transmission parameter during the coordinated communication or a parameter used for the coordinated node to calculate the transmission parameter during the coordinated communication. As this parameter group, parameters corresponding to the number of nodes participating in the coordinated communication are transmitted, so that the amount of information per pattern increases as the number of nodes participating in the coordinated communication increases. Thus, in the format in which information related to the coordination patterns indicated by the coordinator node is added (e.g., FIG. 34), the amount of communication increases as the number of nodes participating in the coordinated communication increases when the coordinated node transmits the determination result to the coordinator node.

For example, as illustrated in FIG. 34, in a case where the coordination pattern number is transmitted together with the coordination pattern, the coordination pattern number is transmitted to the coordinator node together with the determination result (OK or NG) as the response from the coordinated node. This eliminates the need of transmitting information related to the coordinated patterns (e.g., transmission parameter) in the response, and allows the coordinator node to determine whether participation in the coordinated communication is possible for each coordination pattern based on the coordination pattern number. Therefore, according to the format of the response illustrated in FIG. 34, it is possible to indicate, to the coordinator node, whether participation in the coordinated communication is possible for each coordination pattern with the amount of information corresponding to the coordinated pattern numbers, thereby reducing the amount of communication.

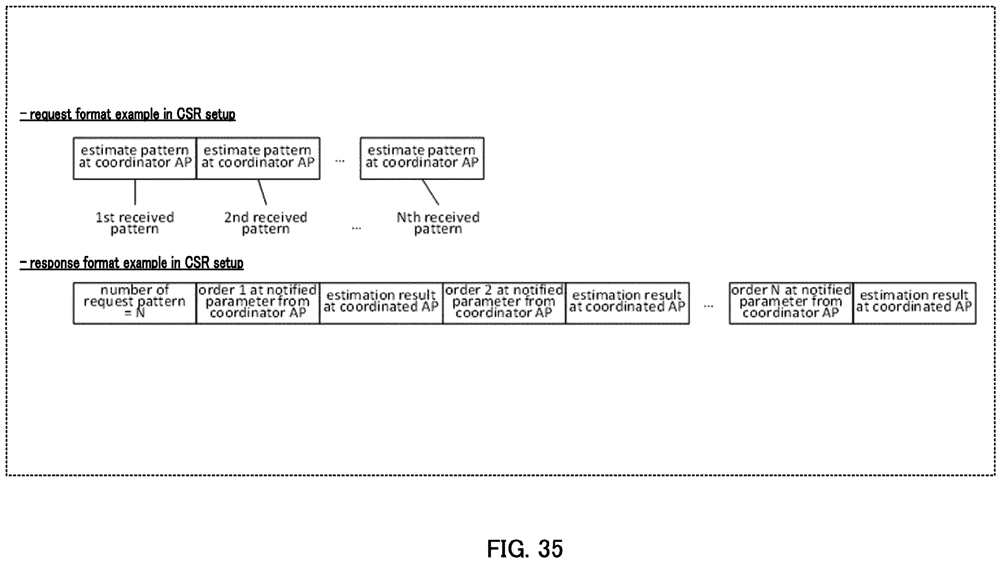

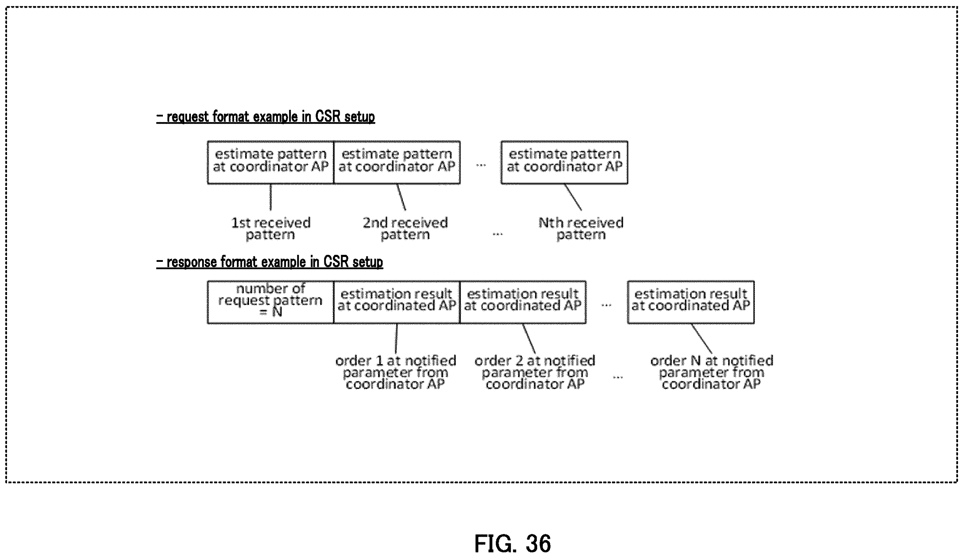

FIGS. 35 and 36 illustrate format examples of the response transmitted from the coordinated node in a case where information (order information) related to an order in which the information related to the coordination pattern is mapped is transmitted when the coordinator node indicates the coordination patterns to the coordinated node. In FIGS. 35 and 36, for example, the order information is used instead of the coordination pattern number in FIG. 34.

For example, in the response format illustrated in FIG. 35, the order information is added as the pattern number in the response. Note that, in the response format illustrated in FIG. 35, the determination result of whether coordinated communication is possible may be transmitted for the coordination pattern including the BSS to which the coordinated node belongs, and the determination result of whether coordinated communication is possible need not be transmitted for the coordination pattern not including the BSS to which the coordinated node belongs, as in the response format illustrated in FIG. 33. This can reduce the amount of information communicated as the response, and can reduce a control delay required for the C-SR control.

In addition, for example, in the response format illustrated in FIG. 36, the order information is not added as the pattern number in the response. For example, in a case where the response in the format illustrated in FIG. 36 is received, the coordinator node may determine that the determination results of whether coordinated communication is possible for the coordination patterns are mapped in the same order as the order of the coordination patterns indicated to the coordinated node. As a result, it is possible to reduce the amount of information communicated as the response, thereby reducing control delays required for the C-SR control.

As described above, according to the present embodiment, a value (coordination pattern number) that has been indicated to the coordinated node by the coordinator node or information on the order of the coordination patterns that has been indicated to the coordinated node by the coordinator node is added to the response that is transmitted from the coordinated node to the coordinator node and includes the determination result of whether coordinated communication is possible, as the information related to the value that has been indicated to the coordinated node by the coordinator node. This allows the coordinator node to appropriately recognize the coordination pattern for which the coordinated communication is determined to be possible from the plurality of coordination patterns, and to select the coordination pattern in which coordinated communication is possible.

### (Embodiment 4)

In the present embodiment, the coordinated node adds information for controlling the transmission parameter for the coordinated communication on the coordinator node side to the response that is transmitted to the coordinator node and includes the determination result of whether participation in the coordinated communication is possible.

For example, as illustrated in FIG. 13, the amount of interference acceptable for the communication of the coordinator node is a value in accordance with the transmission parameter related to the communication of the coordinator node.

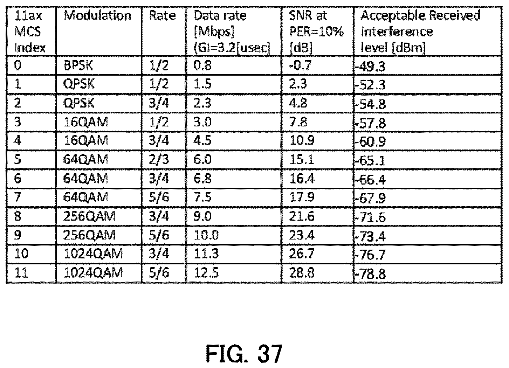

FIG. 37 illustrates an example of an estimation result of the SNR satisfying the packet error rate (PER) ≤ 10% and the ARIL calculated for each MCS index of IEEE 802.11ax in a certain communication. FIG. 37 illustrates, for example, an estimation result in a case where reception power = 55[dBm], bandwidth = 20[MHz], and the number of streams = 1.

For example, in FIG. 37, in a case where a lower limit of a data rate acceptable for the coordinator node is 6 [Mbps], the ARIL of the coordinator node is -65.1 [dBm] or more.

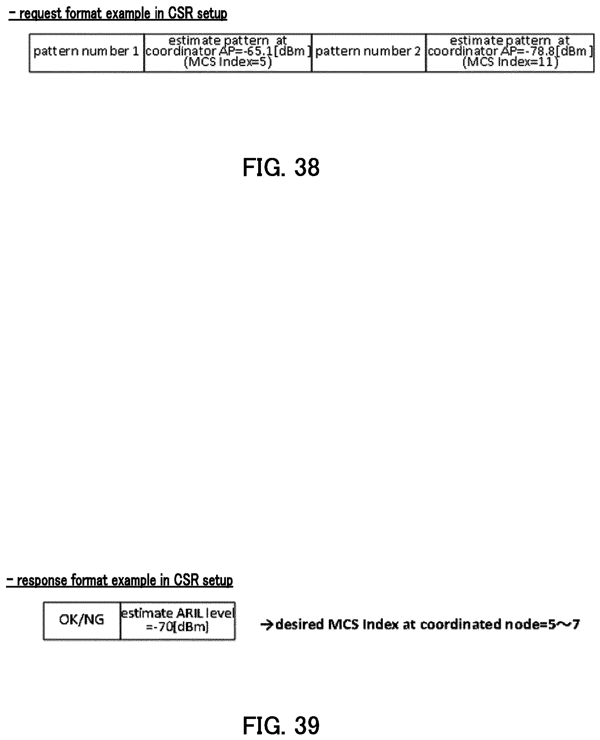

FIG. 38 illustrates an exemplary notification format in the procedure of CSR setup-request in a case where an estimated value of the ARIL in the coordinated communication of the coordinator node is -65.1 [dBm] or more. As illustrated in FIG. 37, the estimated value of the ARIL in a case of an upper limit of the MCS index of IEEE 802.11ax (MCS index = 11) is -78.8 [dBm]. Then, as illustrated in FIG. 38, in the notification in the procedure of CSR setup-request, two patterns of the ARIL corresponding to an assumed upper limit (MCS Index = 11) and a lower limit (MCS Index = 5) of the MCS index may be notified. That is, in the notification in the procedure of CSR setup-request, an assumed range of the ARIL may be notified.

FIG. 39 illustrates an exemplary response format from the coordinated node to the coordinator node in the procedure of CSR setup-response in a case where the coordinated node receives the information illustrated in FIG. 38 in the procedure of CSR setup-request and estimates whether coordinated communication is possible, and determines that coordinated communication is possible when the ARIL is -70 [dBm] or more.

Once the coordinator node receives the response illustrated in FIG. 39 in the procedure of CSR setup-response, the coordinator node estimates the MCS index that satisfies ARIL ≥ -70[dBm] based on the relationship between the MCS index and the ARIL illustrated in FIG. 37. As illustrated in FIG. 37, the MCS index satisfying ARIL ≥ - 70[dBm] is MCS index = 7 or less. Thus, the coordinator node selects the MCS to be used for the communication of the coordinator node in the coordinated communication in a range of the MCS index = 5 to 7.

As described above, according to the present embodiment, by adding the information for controlling the transmission parameter for the coordinated communication on the coordinator node side (e.g., control information related to the transmission parameter used for the simultaneous communication in the coordinator node) to the response that is transmitted from the coordinated node to the coordinator node and includes the determination result of whether to participate in the coordinated communication, the coordinator node can select the transmission parameter that makes it easier to realize the coordinated communication with the coordinated node.

### (Embodiment 5)

In the present embodiment, the coordinated node adds an offset value (e.g., positive or negative offset) with respect to a numerical value (threshold value) notified by the coordinator node, to the response that is transmitted to the coordinator node and includes the determination result of whether participation in the coordinated communication is possible.

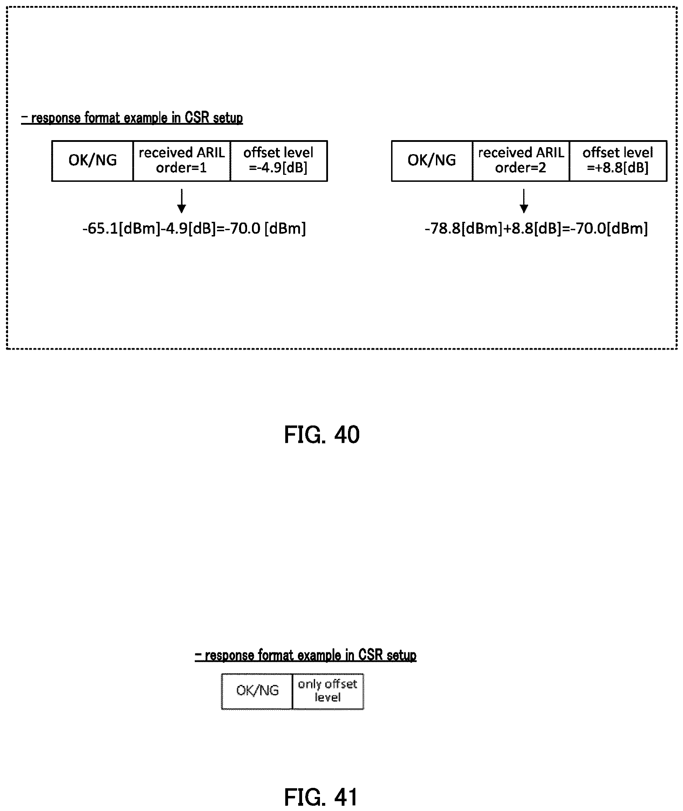

FIG. 40 illustrates an example in a case where a format in which the offset according to the present embodiment is added is applied to the exemplary response described in Embodiment 4.

For example, as illustrated in FIG. 38, in the procedure of CSR setup request, in a case where an estimated value (or reference value) of a first ARIL in the coordinated communication of the coordinator node is -65.1 [dBm] or more, the coordinated node determines that coordinated communication is possible when the ARIL is -70 [dBm] or more, as a result of estimation of whether coordinated communication is possible. In this case, as illustrated on the left side of FIG. 40, the coordinated node adds -4.9 [dB], which is a negative offset, as an offset value with respect to the estimated value (received ARIL order = 1) of the first ARIL, to the response in the procedure of CSR setup response. This allows the coordinated node to notify the coordinator node of the value (-70 [dBm]) of the ARIL offset by -4.9 [dB] from the estimated value (-65.1 [dBm]) of the first ARIL as the value of the ARIL desired by the coordinated node.

Similarly, for example, as illustrated in FIG. 38, in the procedure of CSR setup request, in a case where an estimated value (or reference value) of a second ARIL in the coordinated communication of the coordinator node is -78.8 [dBm] or more, the coordinated node determines that coordinated communication is possible when the ARIL is -70 [dBm] or more, as a result of estimation of whether coordinated communication is possible. In this case, as illustrated on the right side of FIG. 40, the coordinated node adds +8.8[dB], which is a positive offset, as an offset value with respect to the estimated value (received ARIL order = 2) of the second ARIL, to the response in the procedure of CSR setup response. This allows the coordinated node to notify the coordinator node of the value (-70 [dBm]) of the ARIL offset by +8.8 [dB] from the estimated value (-78.8 [dBm]) of the second ARIL as the value of the ARIL desired by the coordinated node.

For example, in a case where both the coordinator node and the coordinated node have been configured in advance with the same reference value, the response may be made from the coordinated node to the coordinator node in a format including the offset without including the reference value, as illustrated in FIG. 41.

As described above, according to the present embodiment, by adding the offset value with respect to the parameter (reference value) notified by the coordinator node, to the response of the determination result of whether participation in the coordinated communication is possible, which is transmitted from the coordinated node to the coordinator node, it is possible to reduce the amount of communication while maintaining the accuracy of the information of the response transmitted from the coordinated node to the coordinator node, thereby enabling the control of coordinated communication.

### (Embodiment 6)

In the present embodiment, the coordinated node adds information from which the communication performance on the coordinated node side in the coordinated communication can be estimated, to the response that is transmitted to the coordinator node and includes the determination result of whether participation in the coordinated communication is possible.

As described in Embodiment 1, in a case where whether coordinated communication is possible is determined for a plurality of coordination patterns, there may be a plurality of coordination patterns in which coordinated communication is possible, as illustrated in FIG. 24. In this case, the coordinator node selects one coordination pattern for performing the coordinated communication from the coordination patterns in which coordinated communication is possible. In the present embodiment, the coordinated node transmits, to the coordinator node, information from which the communication performance on the coordinated node side in the coordinated communication can be estimated, as an indicator of selecting the coordination pattern for performing the coordinated communication.

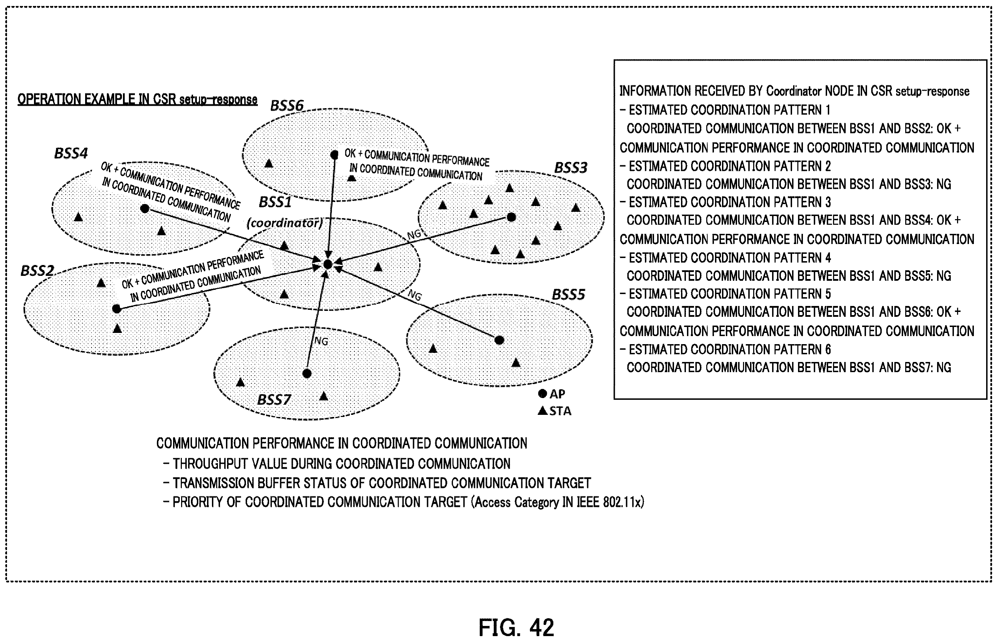

FIG. 42 illustrates an operation example of the procedure of CSR setup-response in a case where the information related to the communication performance of the coordinated node during the coordinated communication (e.g., simultaneous communication) is added to each of the responses of the coordination patterns in which coordinated communication is possible (coordination patterns 1, 3, and 5) illustrated in FIG. 24.

For example, the information related to the communication performance of the coordinated node during the coordinated communication may be information from which a throughput value when the coordinated node performs the coordinated communication can be estimated. In this case, when selecting the coordination pattern for performing the coordinated communication, the coordinator node may select the coordination pattern in which higher throughput performance is obtained, based on the information from which the throughput value during the coordinated communication can be estimated and which is received from each coordinated node.

In addition, for example, the information related to the communication performance of the coordinated node during the coordinated communication may be information related to a transmission buffer status of communication desired by the coordinated node during the coordinated communication. In this case, when selecting the coordination pattern for performing the coordinated communication, the coordinator node may select the coordination pattern including communication with a larger transmission buffer, based on the transmission buffer status received from each coordinated node.

In addition, for example, the information related to the communication performance of the coordinated node during the coordinated communication may be the priority of the communication for which the coordinated node desires the coordinated communication. In this case, when selecting the coordination pattern for performing the coordinated communication, the coordinator node may select the coordination pattern including communication with a higher priority. The priority may be, for example, an access category in IEEE802.11ax, or may be another value.

Note that the information related to the communication performance is not limited to the above-described examples, and may be another information from which the communication performance of the coordinated node during the coordinated communication can be estimated.

As described above, according to the present embodiment, by adding the information from which the communication performance of the coordinated node during the coordinated communication can be estimated, to the response that is transmitted from the coordinated node to the coordinator node and includes the determination result of whether participation in the coordinated communication is possible, the coordinator node can select the coordination pattern that realizes high throughput or low delay, thereby enabling the coordinated communication based on the purpose.

### (Embodiment 7)

In the present embodiment, similarly to Embodiment 6, the coordinated node adds the information from which the communication performance of the coordinated node during the coordinated communication can be estimated, to the response that is transmitted to the coordinator node and includes the determination result of whether participation in the coordinated communication is possible.

In the present embodiment, the information from which the communication performance of the coordinated node during the coordinated communication can be estimated is an estimated throughput value when the coordinated node performs the coordinated communication.

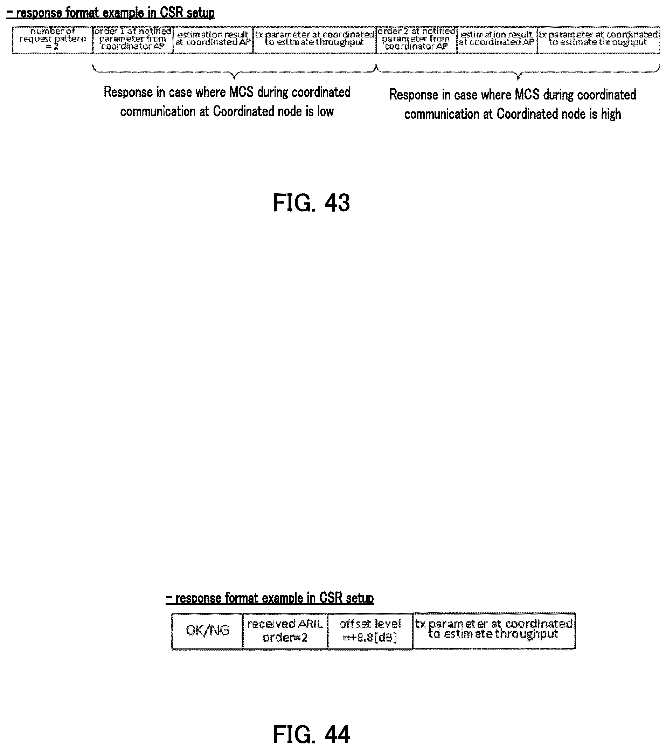

FIGS. 43 and 44 illustrate format examples in which the estimated throughput value when the coordinated node performs the coordinated communication is added to the response transmitted from the coordinated node to the coordinator node, in the procedure of CSR setup-response.

The estimated throughput value may be calculated using, for example, the transmission parameter when the coordinated node performs the coordinated communication. Here, the amount of interference acceptable for the coordinated node or the amount of interference given to the coordinator node may vary depending on the transmission parameter. Thus, the estimated throughput value may be calculated based on each of different transmission parameters.

For example, in the procedure of CSR setup-response, as illustrated in FIG. 43, the throughput value at a low MCS and the throughput value at a high MCS may be added to the response transmitted from the coordinated node to the coordinator node. The coordinator node can determine the coordination pattern for performing the coordinated communication based on, for example, the response including the estimated throughput values for two patterns of the transmission parameters (e.g., MCSs) that have impacts on the coordinated node. The throughput value notified in the procedure of CSR setup-response is not limited to two values as illustrated in FIG. 43, and may be one value or three or more values.

In addition, as illustrated in FIG. 44, the estimated throughput value when the coordinated node performs the coordinated communication may be added to the response format described in Embodiment 5.

As described above, according to the present embodiment, by configuring the estimated throughput value when the coordinated node performs the coordinated communication as the information that is transmitted from the coordinated node to the coordinator node and from which the communication performance of the coordinated node during the coordinated communication can be estimated, the coordinator node can estimate the indicator of the throughput of the coordinated node during the coordinated communication in the selection of the coordination pattern, thereby enabling the coordinated communication that realizes high throughput.

### (Embodiment 8)

In the present embodiment, similarly to Embodiment 6, the coordinated node adds the information from which the communication performance of the coordinated node during the coordinated communication can be estimated, to the response that is transmitted to the coordinator node and includes the determination result of whether participation in the coordinated communication is possible.

In the present embodiment, the information from which the communication performance of the coordinated node during the coordinated communication can be estimated is any one or both of MCS information and the number of transmission streams (the number of transmission layers) when the coordinated node performs the coordinated communication.

Here, the throughput value of the communication can be estimated using a transmission parameter used for communication. For example, in IEEE 802.11ax, as illustrated in FIG. 37, a data rate determined by an MCS index (modulation scheme and coding rate), a bandwidth (20 [MHz]), and the number of streams (one) is defined.

Then, for example, any one or both of the MCS information and the number of transmission streams (the number of transmission layers) may be configured as the information from which the communication performance can be estimated. This allows the coordinator node to estimate the communication performance (e.g., throughput value) of the coordinated node in the coordinated communication.

### (Embodiment 9)

In the present embodiment, the coordinated node adds information related to another coordinated node (e.g., ID of another coordinated node) that has an impact on the coordinated node, to the response that is transmitted to the coordinator node and includes the determination result of whether participation in the coordinated communication is possible.

As described in Embodiment 1, in a case where whether coordinated communication is possible is determined for a plurality of coordination patterns, as illustrated in FIG. 26, there may be a plurality of coordination patterns in which coordinated communication is possible. In this case, the coordinator node selects one coordination pattern for performing the coordinated communication from the coordination patterns in which coordinated communication is possible. In the present embodiment, the coordinated node transmits, to the coordinator node, information indicating a relationship between the BSS to which the coordinated node belongs and another BSS different from the BSS, as an indicator of selecting the coordination pattern for performing the coordinated communication.

For example, in the network configuration illustrated in FIG. 26, it is assumed that BSS4 and BSS6, and BSS3 and BSS5 easily interfere with each other. In this case, in a case where it is determined that coordinated communication is possible for three coordination patterns (e.g., coordination patterns 1 to 3) illustrated in FIG. 26 in the procedure of CSR setup, coordination pattern 2 including BSS4 and BSS6 and coordination pattern 3 including BSS3 and BSS5 each include a set of BSSs that easily interfere with each other. On the other hand, coordination pattern 1 does not include any of the set of BSS4 and BSS6 and the set of BSS3 and BSS5.

Then, for example, the coordinated node of BSS4 may transmit the response including the ID of the coordinated node of BSS6, and the coordinated node of BSS6 may transmit the response including the ID of the coordinated node of BSS4. Similarly, the coordinated node of BSS3 may transmit the response including the ID of the coordinated node of BSS5, and the coordinated node of BSS5 may transmit the response including the ID of the coordinated node of BSS3. Subsequently, the coordinator node selects coordination pattern 1 from among three coordination patterns (e.g., coordination patterns 1 to 3) illustrated in FIG. 26 based on the information from each coordinated node.

As described above, according to the present embodiment, by adding, to the response that is transmitted from the coordinated node to the coordinator node and includes the determination result of whether participation in the coordinated communication is possible, the information (e.g., ID) related to another coordinated node that may cause interference to the coordinated node, the coordinator node can select the coordination pattern based on the relationship between the BSSs.

### (Embodiment 10)

In the present embodiment, similarly to Embodiment 9, the coordinated node adds, to the response that is transmitted to the coordinator node and includes the determination result of whether participation in the coordinated communication is possible, information related to another coordinated node that has an impact on the coordinated node.

In the present embodiment, as the information related to another coordinated node (e.g., ID of another coordinated node) that has an impact on the coordinated node, a BSS ID, a MAC ID, or an ID for allowing the coordinator node to identify a coordinated node is configured.

In a communication system of IEEE 802.11, the BSS ID is configured for each BSS constituting a network, and the MAC ID is configured for each node connected to the network. In addition, an individual ID (ID for allowing a node to be distinguished) is configured for each node. Configuring these IDs as the IDs added to the response transmitted from the coordinated node to the coordinator node allows the coordinated node to specify another coordinated node that can have an impact on the coordinated node that transmits the response.

As described above, according to the present embodiment, by configuring, as the information that is related to another coordinated node having an impact on the coordinated node and is added to the response transmitted from the coordinated node to the coordinator node and including the determination result of whether participation in the coordinated communication is possible, the BSS ID, the MAC ID, or the ID for allowing the coordinator node to identify a coordinated node, the coordinator node can appropriately select the coordination pattern based on the relationship between the BSSs.

### (Embodiment 11)

In the present embodiment, the coordinated node adds, to the response that is transmitted to the coordinator node and includes the determination result of whether participation in the coordinated communication is possible, information related to another coordinated node (e.g., ID of another coordinated node) that has an impact on the coordinated node.

In the present embodiment, IDs that indicate nodes participating in the coordinated control and are listed by the coordinator node are configured as the information related to other coordinated nodes (e.g., IDs of other coordinated nodes) that have impacts on the coordinated node.

As described above, according to the present embodiment, by configuring the IDs that indicate nodes participating in the coordinated control and are listed by the coordinator node as the information that is related to other coordinated nodes having impacts on the coordinated node and is transmitted from the coordinated node to the coordinator node, the coordinator node can appropriately select the coordination pattern based on the relationship between the BSSs in accordance with the response having a smaller amount of information.

### (Embodiment 12)

In the present embodiment, the coordinator node estimates one or a plurality of patterns of the parameters for the coordinated communication and transmits the estimation results to the coordinated node. For example, in the procedure of CSR setup-request, the coordinator node notifies the coordinated node of information including a plurality of transmission parameters (transmission parameter candidates) to be used for the coordinated communication.

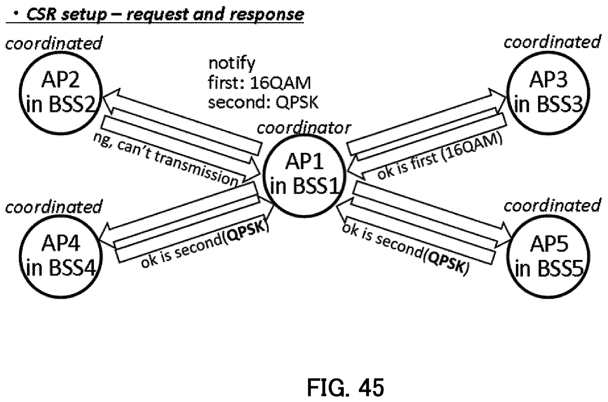

FIG. 45 illustrates an operation example in the procedure of CSR setup when two patterns of the transmission parameters for the coordinated communication (e.g., modulation schemes) are estimated.

In FIG. 45, in the procedure of CSR setup-request, the coordinator node (AP1 of BSS 1) estimates the transmission parameter for the coordinated communication using each of two modulation schemes (e.g., 16QAM and QPSK), and transmits the estimation results of the transmission parameters corresponding to the two modulation schemes (e.g., two patterns) to the coordinated nodes. For example, the acceptable amounts of interference (e.g., ARILs) of the two estimation results may be different due to the difference in the modulation scheme. For example, the acceptable amount of interference when QPSK is used is greater than the acceptable amount of interference when 16QAM is used.

In FIG. 45, the coordinated nodes (e.g., AP2 to AP5) determine whether coordinated communication is possible for each of the two estimation results transmitted from the coordinator node. For example, the number of coordinated nodes for which the coordinated communication is determined to be possible may vary depending on the estimation result of the coordinator node due to the difference in the value of the acceptable amount of interference (e.g., the ARIL) between the two estimation results.

For example, in the example of FIG. 45, AP3 determines that coordinated communication is possible with the acceptable amount of interference (ARIL) when the modulation scheme of the coordinator node during the coordinated communication is 16QAM, while the other three coordinated nodes (AP2, AP4, and AP5) determine that the coordinated communication is not possible with the acceptable amount of interference (ARIL) when the modulation scheme of the coordinator node during the coordinated communication is 16QAM.

In addition, in the example of FIG. 45, AP4 and AP5 determine that coordinated communication is possible with the acceptable amount of interference (ARIL) when the modulation scheme of the coordinator node during the coordinated communication is QPSK, while AP2 determines that the coordinated communication is not possible with the acceptable amount of interference (ARIL) when the modulation scheme of the coordinator node during the coordinated communication is QPSK.

Each coordinated node transmits, to the coordinator node (e.g., AP1), the response including the determination result of whether participation in the coordinated communication is possible.

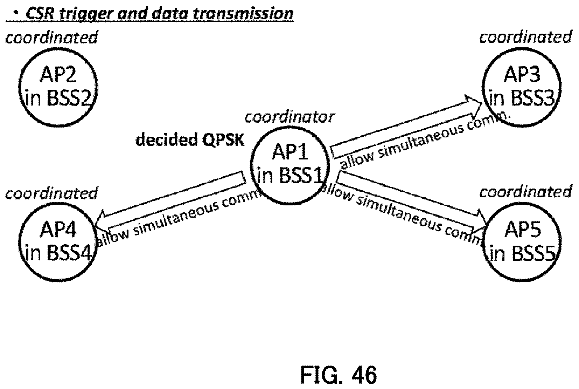

FIG. 46 illustrates an operation example in the procedure of CSR trigger and the procedure of CSR data transmission after the procedure of CSR setup illustrated in FIG. 45 is performed.

In the procedure of CSR trigger, the coordinator node determines a node with which the coordinated communication is performed, based on the determination results of whether coordinated communication is possible, which are notified from the coordinated nodes, and indicates the determination to the coordinated nodes. In the example of FIG. 46, QPSK is selected as the modulation scheme that allows coordinated communication with three coordinated nodes (e.g., AP3 to AP5). Then, in the procedure of CSR data transmission, the coordinated communication is performed by four BSSs (BSS 1, BSS3, BSS4, and BSS5).

Note that, in the examples of FIGS. 45 and 46, a case has been described in which the coordinator node adjusts the modulation scheme of the communication of the coordinator node from 16QAM, in which a higher communication speed can be obtained, to QPSK, in order to realize the coordinated communication with a larger number of nodes, but the present disclosure is not limited thereto. For example, the coordinator node may configure the modulation scheme of the communication for the coordinator node to 16QAM and perform the coordinated communication with AP3 that can perform the coordinated communication even when the modulation scheme of 16QAM is adopted.

As described above, according to the present embodiment, the coordinator node estimates one pattern or a plurality of patterns of the transmission parameters for the coordinated communication and transmits the estimation results to the coordinated node. This allows the coordinator node to select the coordination pattern in which the coordinated communication is performed by the coordinator node and to select the coordinated node based on the response from the coordinated nodes. As a result, the coordinator node can appropriately select the coordination pattern that realizes high throughput or low delay depending on the propagation environments of both the coordinator node and the coordinated node, thereby enabling the coordinated communication based on the purpose.

### (Embodiment 13)

In the present embodiment, similarly to Embodiment 12, the coordinator node estimates one or a plurality of patterns of the parameters for the coordinated communication, and transmits the estimation results to the coordinated node.

In the present embodiment, the estimation results transmitted from the coordinator node to the coordinated node are transmission parameters used for the coordinated communication on the coordinated node side.

For example, as illustrated in FIG. 9, in the centralized C-SR control, in the procedure of CSR setup request, the coordinator node calculates the transmission parameter used for the coordinated communication on the coordinated node side and transmits the calculation result to the coordinated node.

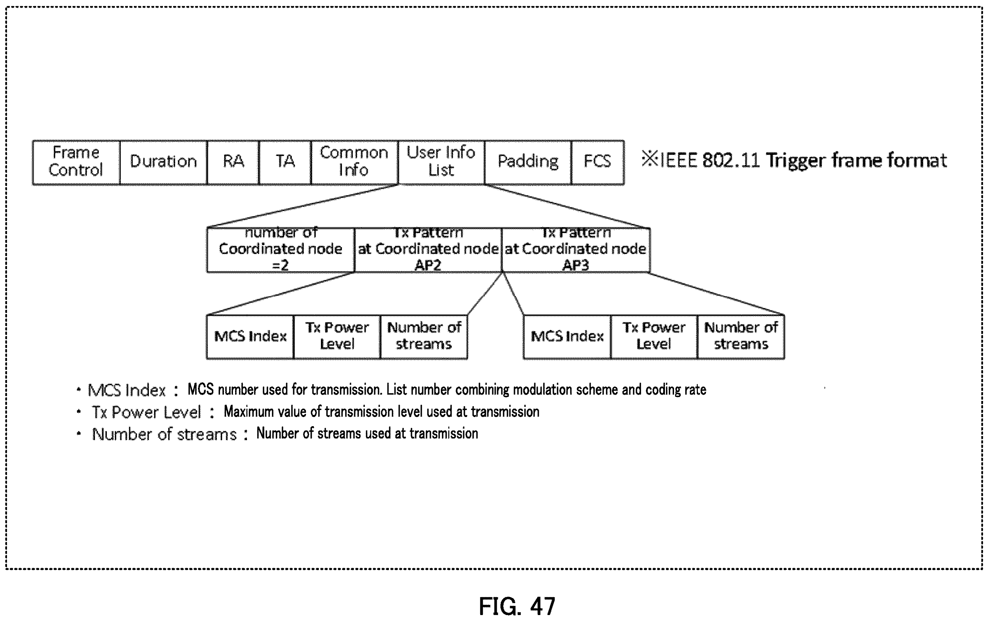

FIG. 47 illustrates an exemplary format used for transmission from the coordinator node to the coordinated node. The format illustrated in FIG. 47 is a format based on the format of a Trigger frame defined in IEEE 802.11. In the trigger frame, individual information for a plurality of destinations (coordinated nodes in the present embodiment) is stored in a User Info field (e.g., User Info List field). In the present embodiment, the transmission parameter for each coordinated node may be stored in the User Info field. In the example of FIG. 47, the transmission parameter for each coordinated node includes an MCS index, a transmission power level, and the number of streams.

As described above, according to the present embodiment, the transmission parameter which is an estimation result transmitted from the coordinator node to the coordinated node and is used for the coordinated communication on the coordinated node side is transmitted in a format (e.g., format based on the Trigger frame) that can be individually acquired by the coordinated node. Accordingly, it is possible to select the coordination pattern that realizes high throughput or low delay in the centralized type C-SR control, thereby enabling the coordinated communication based on the purpose.

### (Embodiment 14)

In the present embodiment, similarly to Embodiment 12, the coordinator node estimates one pattern or a plurality of patterns of the parameters for the coordinated communication, and transmits the estimation results to the coordinated node.

In the present embodiment, the estimation results transmitted from the coordinator node to the coordinated node are transmission parameters used for the coordinated communication on the coordinator node side.

For example, as illustrated in FIG. 11, in the distributed C-SR control, the coordinator node calculates information (ARIL in FIG. 11) used by the coordinated node for the estimation calculation of the transmission parameter and transmits the calculation result to the coordinated node in the procedure of CSR setup request.

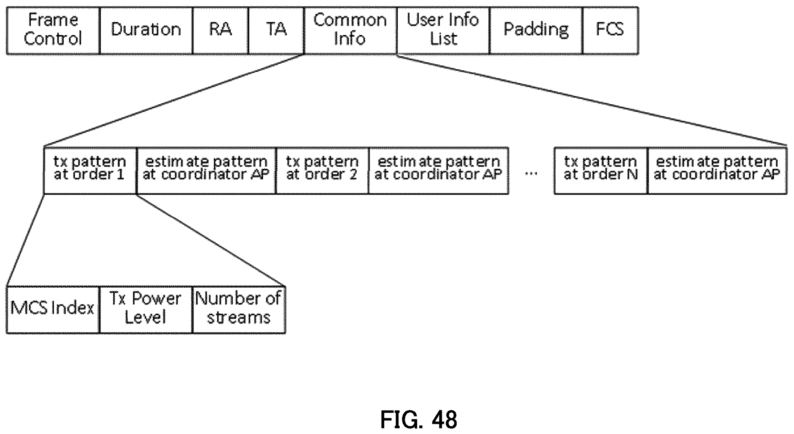

FIG. 48 illustrates an exemplary format used for transmission from the coordinator to the coordinated node. The format illustrated in FIG. 48 is based on the format of a Trigger frame defined in IEEE 802.11. In the Trigger frame, information common to a plurality of destinations (coordinated nodes in the present embodiment) is stored in a Common Info field. In the present embodiment, the transmission parameter of the coordinator node used in the coordinated communication calculated in the coordinator node may be stored in the Common Info field. In the example of FIG. 48, the transmission parameter of the coordinated node includes an MCS index, a transmission power level, and the number of streams.

The coordinated node determines whether coordinated communication is possible in the coordinated node based on the ARIL (estimated value) transmitted from the coordinator node in the format illustrated in FIG. 48 and the transmission parameter on the coordinator node side. In a case where it is determined that the coordinated communication is not possible in this determination, the coordinated node may request the coordinator node to adjust the transmission parameter (e.g., modulation scheme or transmission power) used for the coordinated communication in the coordinator node in a direction of increasing the ARIL. In a case where it is determined that coordinated communication is possible as a result of adjusting the transmission parameter based on the request received from the coordinated node, the coordinator node performs the coordinated communication including the coordinated node that has requested the adjustment.

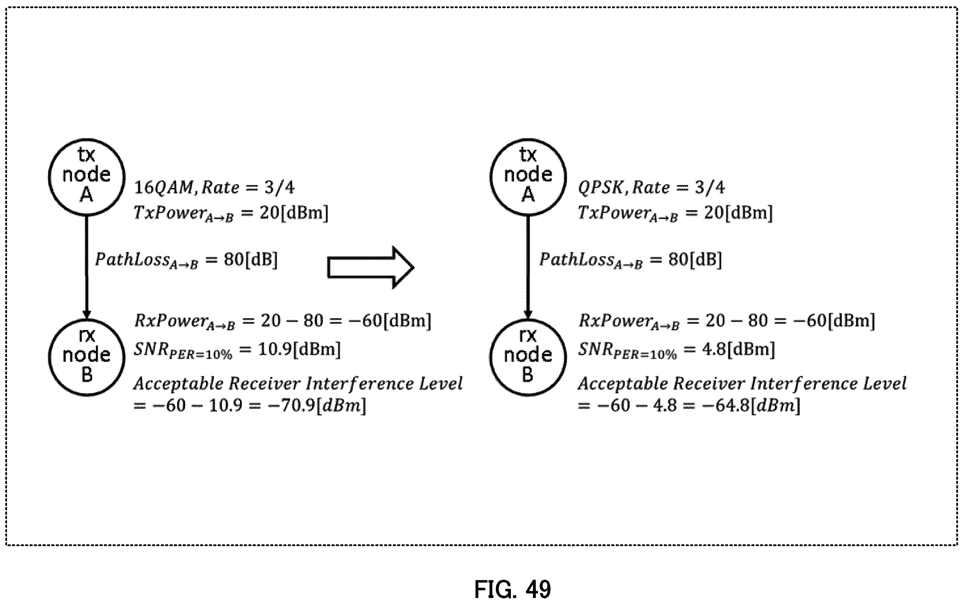

FIG. 49 illustrates an exemplary change in the value of the ARIL when the modulation scheme among the transmission parameters is changed from 16QAM to QPSK. As illustrated in FIG. 49, the ARIL is greater in a case where the modulation scheme is QPSK than in a case where the modulation scheme is 16QAM.

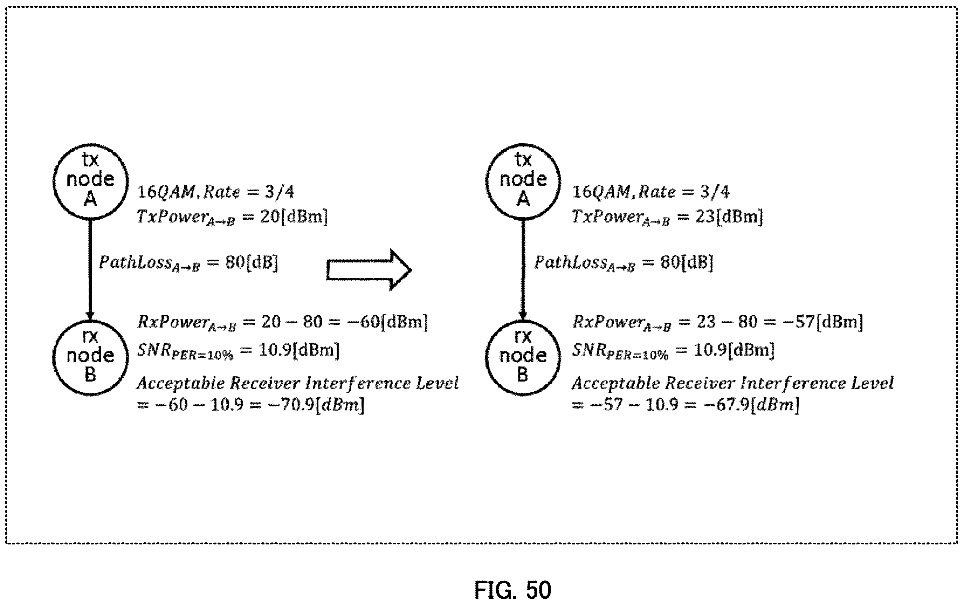

In addition, FIG. 50 illustrates an exemplary change in the value of the ARIL when a transmission power among transmission parameters is changed from 20 [dBm] to 23 [dBm]. As illustrated in FIG. 50, the ARIL is greater in a case where the transmission power is 23 [dBm] than in a case where the transmission power is 20 [dBm].

The transmission parameter to be changed is not limited to the modulation scheme and the transmission power, and may be another parameter. In addition, the number of parameters to be changed is not limited to one, and two or more parameters may be changed.

As described above, in the present embodiment, the transmission parameter used for the coordinated communication on the coordinator node side is configured as the estimation result transmitted from the coordinator node to the coordinated node. As a result, the coordinated node estimates whether the transmission parameter of the coordinator node used for the coordinated communication can be adjusted, and requests the coordinator node to adjust the transmission parameter during the coordinated communication so that the coordinated communication is easily realized in the coordinated node. Accordingly, in the present embodiment, it is possible to select the coordination pattern that realizes high throughput or low delay in the distributed C-SR control, thereby enabling the coordinated communication based on the purpose.

### (Embodiment 15)

In the present embodiment, similarly to Embodiment 12, the coordinator node estimates one or a plurality of patterns of the parameters for the coordinated communication, and transmits the estimation results to the coordinated node.

In the present embodiment, the estimation results transmitted from the coordinator node to the coordinated node is the acceptable amount of interference during the coordinated communication on the coordinator node side.

For example, as illustrated in FIG. 11, in the distributed C-SR control, the coordinator node calculates information (ARIL in FIG. 11) used for the estimation calculation of the transmission parameter in the coordinated node and transmits the calculation result to the coordinated node.

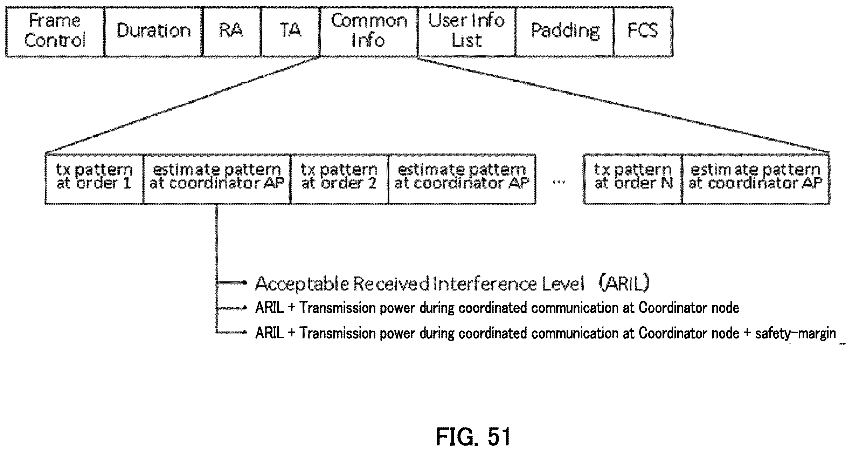

FIG. 51 illustrates an exemplary format in which the ARIL is transmitted from the coordinator node to the coordinated node. The format illustrated in FIG. 51 is a format based on the format of a Trigger frame defined in IEEE 802.11. In the Trigger frame, information common to a plurality of destinations (coordinated nodes in the present embodiment) is stored in a Common Info field. In the present embodiment, the transmission parameter of the coordinator node used in the coordinated communication and calculated by the coordinator node may be stored in the Common Info field.

For example, in the determination of whether to participate in the coordinated communication performed by the coordinated node, the ARIL is used in the operation example illustrated in FIG. 14, but a propagation path loss value between nodes and the transmission power of the coordinator node during the coordinated communication are also used. Then, for example, as illustrated in FIG. 51, the parameter transmitted from the coordinator node to the coordinated node may be a value obtained by adding the transmission power to the ARIL (or value obtained by adding a margin to the transmission power) in accordance with the C-SR control method, as the acceptable amount of interference during the coordinated communication on the coordinator node side.

In the present embodiment, the ARIL is described as an example of the acceptable amount of interference during the coordinated communication, but the estimation result transmitted from the coordinator node to the coordinated node is not limited to the ARIL and may be another information used for the C-SR control.

As described above, according to the present embodiment, the acceptable amount of interference during the coordinated communication on the coordinator node side is configured as the estimation result transmitted from the coordinator node to the coordinated node. This allows the coordinated node to perform the determination in consideration of the impact of the interference on the coordinator node, and can select the coordination pattern that realizes high throughput or low delay in the distributed C-SR control, thereby enabling the coordinated communication based on the purpose.

### (Embodiment 16)

In the present embodiment, similarly to Embodiment 12, the coordinator node estimates one or a plurality of patterns of the parameters for the coordinated communication, and transmits the estimation results to the coordinated node.

In the present embodiment, the estimation result transmitted from the coordinator node to the coordinated node is at least one of the estimated transmission parameter used for the coordinated communication on the coordinated node side (e.g., the same value as in Embodiment 13), the estimated transmission parameter used for the coordinated communication on the coordinator node side (e.g., the same value as in Embodiment 14), or the estimated amount of interference acceptable during the coordinated communication on the coordinator node side (e.g., the same value as in Embodiment 15), or the result of adding these values.

In Embodiments 13 to 15, the information and the format example transmitted from the coordinator node to the coordinated node in the procedure of CSR setup-request have been described by classifying the C-SR control into the centralized type illustrated in FIG. 9 and the distributed type illustrated in FIG. 11, but the terms "centralized type" and "distributed type" are for descriptive convenience, and the C-SR control can be realized in other C-SR control procedures.

Here, the information transmitted from the coordinator node to the coordinated node in the procedure of CSR setup-request varies depending on the configuration of the coordinated node (e.g., FIGS. 7 and 8) and the processing performed in the coordinated node (e.g., FIGS. 9 and 11).

Then, in the present embodiment, it is possible to perform the notification tailored to the information used by the coordinated node by transmitting a plurality of values included in the formats illustrated in Embodiments 13, 14, and 15, or the result of adding the values, as the format used for the notification from the coordinator node to the coordinated node in the procedure of CSR setup-request.

As described above, according to the present embodiment, the estimation result transmitted from the coordinator node to the coordinated node is configured to any one or a plurality of values of the estimated transmission parameter used for the coordinated communication on the coordinated node side, the estimated transmission parameter used for the coordinated communication on the coordinator node side, the estimated amount of interference acceptable during the coordinated communication on the coordinator node side, and/or the result of adding the values. Accordingly, by performing the notification in accordance with the configuration of the coordinated node and the C-SR control method, it is possible to select the coordination pattern that realizes high throughput or low delay in the C-SR control, thereby enabling the coordinated communication based on the purpose.

The embodiments of the present disclosure have been each described, thus far.

The format of the signal described in each embodiment described above is merely an example, and may be another configuration in which at least one of the addition of another field or the deletion of one or some fields is performed, or may be another configuration in which at least one of the addition of another subfield or the deletion of one or some subfields is performed in each of the fields described above.

In addition, in the embodiments described above, a case based on a format defined in IEEE 802.11 has been described as an example, but the format to which an exemplary embodiment of the present disclosure is applied is not limited to the format of IEEE 802.11.

In addition, the values of the parameters such as the number of APs, the number of BSSs, the number of STAs, the modulation scheme, the coding rate, the transmission power, the number of streams, and the bandwidth used in each embodiment described above are merely examples, and may be other values.

In addition, in each embodiment described above, a case has been described in which the nodes that perform the coordinated communication include a coordinator node (node that controls the coordinated communication), but the present disclosure is not limited thereto. For example, the nodes that perform the coordinated communication need not include the coordinator node. For example, the coordinator node may select a plurality of nodes (e.g., coordinated nodes) different from the coordinator node as the nodes that perform the coordinated communication.

In addition, embodiments described above may be applied in combination. For example, the response indicated from the coordinated node to the coordinator node in the procedure of CSR setup-response may include the information described in at least two embodiments among Embodiments 1 to 11. In addition, for example, in the procedure of CSR setup-request, the information indicated from the coordinator node to the coordinated node may include the information described in at least two embodiments among Embodiments 12 to 16.

In addition, in each embodiment described above, the C-SR method of controlling the simultaneous communication in which time and/or space is shared between the plurality of nodes has been described as an example of the coordinated communication, but the method of the coordinated communication is not limited to C-SR, and may be another method. For example, an exemplary embodiment of the present disclosure may be applied to coordinated communication in which the information on whether participation in the coordinated communication is possible is exchanged between a plurality of nodes and/or may be applied to coordinated communication in which the estimated value of the transmission parameter is exchanged between a plurality of nodes.

The present disclosure can be realized by software, hardware, or software in cooperation with hardware. Each functional block used in the description of each embodiment described above can be partly or entirely realized by an LSI such as an integrated circuit, and each process described in each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication apparatus performing a function of communication described in the present disclosure. For example, the communication apparatus may comprise a controller or a sensor that generates control signals or data signals which are used by a communication apparatus performing a communication function of the communication apparatus.

The communication apparatus also may include an infrastructure facility, such as a base station, an access point, and any other apparatus, device or system that communicates with or controls apparatuses such as those in the above non-limiting examples.

A communication apparatus according to an exemplary embodiment of the present disclosure includes: reception circuitry, which, in operation, receives first information related to a configuration of coordinated communication from another communication apparatus that controls the coordinated communication; and transmission circuitry, which, in operation, transmits, to the other communication apparatus, second information including a determination result of whether participation in the coordinated communication based on the first information is possible.

In the exemplary embodiment of the present disclosure, the first information includes information related to a configuration for each of a plurality of patterns representing candidates for a combination of nodes that perform the coordinated communication, and the second information includes the determination result for each of the plurality of patterns.

In the exemplary embodiment of the present disclosure, the second information includes information for identifying the plurality of patterns or information related to an order in which information corresponding to the plurality of patterns is mapped in the first information.

In the exemplary embodiment of the present disclosure, the second information includes control information related to a transmission parameter used by the other communication apparatus for the coordinated communication.

In the exemplary embodiment of the present disclosure, the second information includes an offset value for a parameter included in the first information.

In the exemplary embodiment of the present disclosure, the second information includes information from which estimation of communication performance of the communication apparatus during the coordinated communication is allowed.

In the exemplary embodiment of the present disclosure, the information from which the estimation of communication performance is allowed is information related to at least one of a modulation and coding scheme (MCS) and/or a stream when the communication apparatus performs the coordinated communication, or information related to an estimated value of throughput when the communication apparatus performs the coordinated communication.

In the exemplary embodiment of the present disclosure, the second information includes information related to a certain communication apparatus that is likely to cause interference with the communication apparatus in the coordinated communication.

In the exemplary embodiment of the present disclosure, the information related to the certain communication apparatus that is likely to cause the interference with the communication apparatus is any one of information for identifying the certain communication apparatus, information for identifying a basic service set (BSS) to which the certain communication apparatus belongs, information allowing the other communication apparatus to distinguish the certain communication apparatus, or information for identifying a communication apparatus that participates in the coordinated communication.

In the exemplary embodiment of the present disclosure, the first information includes estimated values of a plurality of transmission parameters used for the coordinated communication.

In the exemplary embodiment of the present disclosure, the estimated values are each an estimated value of a transmission parameter used by the other communication apparatus for the coordinated communication.

In the exemplary embodiment of the present disclosure, the estimated values are each an estimated value of a transmission parameter used by the communication apparatus for the coordinated communication.

In the exemplary embodiment of the present disclosure, the estimated values are each an estimated value of an amount of interference acceptable when the other communication apparatus performs the coordinated communication.

A communication apparatus according to an exemplary embodiment of the present disclosure includes: transmission circuitry, which, in operation, transmits first information related to a configuration of coordinated communication to another communication apparatus that receives control of the coordinated communication; and reception circuitry, which, in operation, receives, from the other communication apparatus, second information including a determination result of whether participation in the coordinated communication based on the first information is possible.

In a communication method according to an exemplary embodiment of the present disclosure, a communication apparatus receives first information related to a configuration of coordinated communication from another communication apparatus that controls the coordinated communication, and transmits, to the other communication apparatus, second information including a determination result of whether participation in the coordinated communication based on the first information is possible.

In a communication method according to an exemplary embodiment of the present disclosure, a communication apparatus transmits first information related to a configuration of coordinated communication to another communication apparatus that receives control of the coordinated communication, and receives, from the other communication apparatus, second information including a determination result of whether participation in the coordinated communication based on the first information is possible.

The disclosure of Japanese Patent Application No. 2023-062316, filed on April 6, 2023, including the specification, drawings and abstract, is incorporated herein by reference in its entirety.

### Industrial Applicability

An exemplary embodiment of the present disclosure is useful for radio communication systems.

### Reference Signs List

101, 102 Communication apparatus
111 C-SR control transmission parameter estimator
112 Transmission parameter determiner
113 Access controller
114 Error correction encoder
115 Modulator
116 Radio transceiver
117 Demodulator
118 Error correction decoder
119 C-SR control transmission parameter determiner

## Claims

1. A communication apparatus, comprising:
reception circuitry, which, in operation, receives first information related to a configuration of coordinated communication from another communication apparatus that controls the coordinated communication; and
transmission circuitry, which, in operation, transmits, to the other communication apparatus, second information including a determination result of whether participation in the coordinated communication based on the first information is possible.

2. The communication apparatus according to claim 1, wherein
the first information includes information related to a configuration for each of a plurality of patterns representing candidates for a combination of nodes that perform the coordinated communication, and
the second information includes the determination result for each of the plurality of patterns.

3. The communication apparatus according to claim 2, wherein
the second information includes information for identifying the plurality of patterns or information related to an order in which information corresponding to the plurality of patterns is mapped in the first information.

4. The communication apparatus according to claim 1, wherein
the second information includes control information related to a transmission parameter used by the other communication apparatus for the coordinated communication.

5. The communication apparatus according to claim 1, wherein
the second information includes an offset value for a parameter included in the first information.

6. The communication apparatus according to claim 1, wherein
the second information includes information from which estimation of communication performance of the communication apparatus during the coordinated communication is allowed.

7. The communication apparatus according to claim 6, wherein
the information from which the estimation of communication performance is allowed is information related to at least one of a modulation and coding scheme (MCS) and/or a stream when the communication apparatus performs the coordinated communication, or information related to an estimated value of throughput when the communication apparatus performs the coordinated communication.

8. The communication apparatus according to claim 1, wherein
the second information includes information related to a certain communication apparatus that is likely to cause interference with the communication apparatus in the coordinated communication.

9. The communication apparatus according to claim 8, wherein
the information related to the certain communication apparatus that is likely to cause the interference with the communication apparatus is any one of information for identifying the certain communication apparatus, information for identifying a basic service set (BSS) to which the certain communication apparatus belongs, information allowing the other communication apparatus to distinguish the certain communication apparatus, or information for identifying a communication apparatus that participates in the coordinated communication.

10. The communication apparatus according to claim 1, wherein
the first information includes estimated values of a plurality of transmission parameters used for the coordinated communication.

11. The communication apparatus according to claim 10, wherein
the estimated values are each an estimated value of a transmission parameter used by the other communication apparatus for the coordinated communication.

12. The communication apparatus according to claim 10, wherein
the estimated values are each an estimated value of a transmission parameter used by the communication apparatus for the coordinated communication.

13. The communication apparatus according to claim 10, wherein
the estimated values are each an estimated value of an amount of interference acceptable when the other communication apparatus performs the coordinated communication.

14. A communication apparatus, comprising:
transmission circuitry, which, in operation, transmits first information related to a configuration of coordinated communication to another communication apparatus that receives control of the coordinated communication; and
reception circuitry, which, in operation, receives, from the other communication apparatus, second information including a determination result of whether participation in the coordinated communication based on the first information is possible.

15. A communication method, comprising:
receiving, by a communication apparatus, first information related to a configuration of coordinated communication from another communication apparatus that controls the coordinated communication; and
transmitting, by the communication apparatus, to the other communication apparatus, second information including a determination result of whether participation in the coordinated communication based on the first information is possible.

16. A communication method, comprising:
transmitting, by a communication apparatus, first information related to a configuration of coordinated communication to another communication apparatus that receives control of the coordinated communication; and
receiving, by the communication apparatus, from the other communication apparatus, second information including a determination result of whether participation in the coordinated communication based on the first information is possible.
